# EUROPEAN PATENT APPLICATION

(11) **EP 4 783 663 A1**
(43) Date of publication of application: **29.07.2026**
(21) Application number: 24867286.7
(22) Date of filing: 02.09.2024
(51) Int. Cl.: H04W 36/00

(54) **DATA TRANSMISSION METHOD, APPARATUS AND COMMUNICATION SYSTEM**

(30) Priority: 20.09.2023 CN 202311230128; 27.09.2023 CN 202311288591
(71) Applicant: HUAWEI TECHNOLOGIES CO., LTD., Shenzhen, Guangdong 518129 (CN)
(72) Inventor: PAN, Xiaodan, Shenzhen, Guangdong 518129 (CN); AHLUWALIA, Jagdeep Singh, Shenzhen, Guangdong 518129 (CN); OLOFSSON, Henrik, Shenzhen, Guangdong 518129 (CN); PENG, Wenjie, Shenzhen, Guangdong 518129 (CN)
(74) Representative: Maiwald GmbH
(86) International application number: PCT/CN2024/116312
(87) International publication number: WO 2025/060874

(57) **Abstract**

A data transmission method, an apparatus, and a communication system are provided, and relate to the field of wireless communication technologies. A first terminal communicates with a first network device through a relay device. The first network device determines that the first terminal switches from the first network device to a third network device, and sends first indication information to a second network device. The first terminal communicates with the second network device through the relay device. The first indication information indicates a downlink transmission requirement or a downlink transmission parameter of the first terminal, to indicate the first network device to send first downlink data to the third network device. The first downlink data includes downlink data for which a reception success acknowledgment indication is received from the relay device. Therefore, the first network device may indicate the downlink transmission requirement or the downlink transmission parameter of the first terminal to the second network device, so that the second network device knows how to forward the downlink data of the first terminal to the third network device, thereby reducing packet loss and ensuring downlink data transmission performance of the first terminal.

## Description

### CROSS-REFERENCE TO RELATED APPLICATIONS

This application claims priorities to Chinese Patent Application No. 202311230128.2, filed with the China National Intellectual Property Administration on September 20, 2023 and entitled "DATA TRANSMISSION METHOD, APPARATUS, AND COMMUNICATION SYSTEM", and to Chinese Patent Application No. 202311288591.2, filed with the China National Intellectual Property Administration on September 27, 2023 and entitled "DATA TRANSMISSION METHOD, APPARATUS, AND COMMUNICATION SYSTEM", both of which are incorporated by reference in their entireties.

### TECHNICAL FIELD

Embodiments of this application relate to the field of wireless communication technologies, and in particular, to a data transmission method, an apparatus, and a communication system.

### BACKGROUND

In a wireless communication system, a user equipment (user equipment) may communicate with a base station through a relay (relay) device. The UE is referred to as a remote UE, and the relay device and the remote UE may communicate with each other through a sidelink. When the remote UE moves, a communication link further needs to be switched based on a configuration of a source base station. When inter-base station switching is involved, to ensure service continuity, the source base station may further send downlink data of the remote UE to a target base station in a data forwarding (data forwarding) manner, so that the target base station sends the downlink data to the remote UE after the remote UE successfully accesses the target base station.

When sending the downlink data to the remote UE based on a source link and the relay device, the source base station receives only an acknowledgment (acknowledgment, ACK) message and a negative acknowledgment (negative acknowledgment, NACK) message of a downlink data packet from the relay device, but cannot sense a data transmission status between the relay device and the remote UE. Therefore, if the data packet transmitted between the relay device and the remote UE is lost but the source base station cannot learn of this situation in time, when implementing a data forwarding mechanism, the source base station cannot forward the lost data packet between the relay device and the remote UE to the target base station. As a result, the remote UE still cannot obtain the required data packet after the switching, that is, packet loss occurs.

Therefore, how to reduce packet loss is still an important problem that needs to be urgently resolved.

### SUMMARY

Embodiments of this application provide a data transmission method, an apparatus, and a communication system, to reduce packet loss and ensure downlink data transmission performance of a terminal device.

According to a first aspect, an embodiment of this application provides a data transmission method. The method may be performed by a first network device, or may be performed by a component of the first network device, for example, a chip or a processor. In the method, a first terminal communicates with the first network device through a relay device, and the first network device may be a control plane of a central unit of a source base station. The first network device determines that the first terminal switches from the first network device to a third network device; and sends first indication information to a second network device, where the first terminal communicates with the second network device through the relay device, the first indication information indicates a downlink transmission requirement or a downlink transmission parameter of the first terminal, the downlink transmission requirement or the downlink transmission parameter of the first terminal indicates the second network device to send first downlink data to the third network device, and the first downlink data includes downlink data for which a reception success acknowledgment indication is received from the relay device. Optionally, the first downlink data includes downlink data of one or more radio bearers of the first terminal.

Based on the foregoing solution, the first network device may indicate the downlink transmission requirement or the downlink transmission parameter of the first terminal to the second network device, so that the second network device knows how to forward the downlink data of the first terminal to the third network device, thereby reducing packet loss and ensuring downlink data transmission performance of the first terminal, for example, downlink lossless transmission. Optionally, the first network device may further indicate the second network device to buffer the first downlink data of the first terminal, so that a part or all of the buffered first downlink data can be forwarded to the first terminal during inter-base station switching, thereby reducing packet loss and ensuring downlink data transmission performance of the first terminal, for example, downlink lossless transmission. It should be understood that, in this embodiment of this application, the relay device may be a relay terminal device, or may be a relay network device. Specific implementation of the relay device is not limited in this embodiment of this application.

It may be understood that the foregoing solution is described by using an example in which a CU-CP function and a CU-UP function of a target network device are not deployed separately. In actual application, when the CU-CP function and the CU-UP function of the target network device are deployed separately, for example, the CU-CP function is deployed on the third network device, and the CU-UP function is deployed on a fourth network device, the downlink transmission requirement or the downlink transmission parameter of the first terminal may specifically indicate the second network device to send the first downlink data to the fourth network device. In an example, the first indication information may further indicate to buffer first downlink data of the one or more radio bearers of the first terminal. For example, a first radio bearer is used to represent the one or more radio bearers of the first terminal, and the first indication information may include an identifier of the first radio bearer.

Based on the foregoing solution, the first network device may buffer and forward downlink data of some radio bearers of the first terminal as required, so as to ensure downlink data transmission performance of the some radio bearers of the first terminal, and reduce buffer overheads.

In a possible case, the method may further include: sending a first message to the third network device, where the first message includes the downlink transmission requirement or the downlink transmission parameter of the first terminal.

Based on the foregoing solution, the first network device may notify the third network device of the downlink transmission requirement or the downlink transmission parameter of the first terminal by using the first message, so that the third network device can cooperate with the first network device to implement a data forwarding mechanism, thereby ensuring downlink lossless transmission of the first terminal.

In an example, the first message may include an identifier of the one or more radio bearers of the first terminal. For example, a transmission mode of the first radio bearer is an acknowledged mode, or quality of service of the first radio bearer meets a first transmission requirement.

Based on the foregoing solution, the first network device may notify the third network device of downlink transmission requirements or downlink transmission parameters of some radio bearers of the first terminal as required, so that the third network device can cooperate with the first network device to implement a data forwarding mechanism based on these radio bearers, thereby ensuring downlink data transmission performance of the some radio bearers of the first terminal. The transmission mode or the quality of service is merely an example for describing a manner of determining these radio bearers, but is not any limitation. During specific implementation, the first network device may also determine the radio bearers with reference to a specific application requirement or a service scenario. This is not specifically limited in this embodiment of this application.

In a possible case, the first message is further used to request to hand over the first terminal to the third network device. That is, the first message may be a handover request message from the first network device. It should be understood that this is merely an example for describing an implementation of the first message, but is not any limitation. During specific implementation, the first message may also be, for example, an E1 message that is newly added between the first network device and the third network device and that indicates a downlink lossless transmission requirement or a downlink lossless transmission parameter of the first terminal.

In a possible case, the method may further include: sending second indication information to the second network device, where the second indication information includes a receiving status of the downlink data of the one or more radio bearers of the first terminal.

Based on the foregoing solution, the first network device may indicate the receiving status of the downlink data of the one or more radio bearers of the first terminal to the second network device, so that the second network device can forward the downlink data of the first terminal to a target base station based on the receiving status of the downlink data of the first terminal, thereby reducing packet loss and ensuring downlink data transmission performance of the first terminal.

In a possible case, the method may further include: determining a receiving status of the downlink data of the one or more radio bearers of the first terminal; and sending the second indication information to the second network device includes: sending the second indication information to the second network device based on the receiving status.

In an example, the method may further include: receiving a second message from the third network device, where the second message includes a receiving status of the downlink data of the one or more radio bearers of the first terminal. For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In an example, the receiving status of the downlink data of the one or more radio bearers of the first terminal may be from the first terminal.

In a possible case, the method may further include: sending third indication information to the second network device, where the third indication information indicates the second network device to stop buffering the first downlink data.

In an example, sending the third indication information to the second network device may include: receiving a third message, where the third message indicates to release a terminal context; or the third message indicates to release a connection between the first network device and a core network device; and sending the third indication information to the second network device.

In an example, sending the third indication information to the second network device may include: sending a fourth message to the first terminal, where the fourth message indicates the first terminal to switch from the first network device to the third network device, and/or indicates the first terminal to switch from the second network device to the fourth network device; and sending the third indication information to the second network device.

In an example, sending the third indication information to the second network device may include: receiving a fifth message from the first terminal, where the fifth message is used to acknowledge that the first terminal switches from the first network device to the third network device, and/or acknowledge that the first terminal switches from the second network device to the fourth network device; and sending the third indication information to the second network device.

In a possible case, the method may further include: sending fourth indication information to the second network device, where the fourth indication information includes a data amount buffer threshold of the second network device.

According to a second aspect, an embodiment of this application further provides a data transmission method. The method may be performed by a second network device, or may be performed by a component of the second network device, for example, a chip or a processor. In the method, a first terminal communicates with the second network device through a relay device. The second network device receives first indication information from a first network device, where the first terminal communicates with the first network device through the relay device, the first indication information indicates a downlink transmission requirement or a downlink transmission parameter of the first terminal, the downlink transmission requirement or the downlink transmission parameter of the first terminal indicates the second network device to send first downlink data to a fourth network device, and the first downlink data includes downlink data for which a reception success acknowledgment indication is received from the relay device; and buffers the first downlink data of the first terminal. Optionally, the first downlink data includes downlink data of one or more radio bearers of the first terminal.

Based on the foregoing solution, when a CU-CP function and a CU-UP function of a source base station are deployed separately, for example, the CU-CP function is deployed on the first network device, and the CU-UP function is deployed on the second network device, the second network device may learn, based on an indication of the first network device, how to forward the downlink data of the first terminal to the fourth network device, thereby reducing packet loss and ensuring downlink data transmission performance of the first terminal, for example, downlink lossless transmission. Therefore, the second network device may buffer the first downlink data of the first terminal based on the first indication information, to forward a part or all of the buffered first downlink data of the first terminal to the first terminal after the switching, thereby reducing packet loss and ensuring downlink data transmission performance of the first terminal.

It may be understood that the foregoing solution is described by using an example in which a CU-CP function and a CU-UP function of a target network device are deployed separately. In actual application, when the CU-CP function and the CU-UP function of the target network device are not deployed separately, for example, the CU-CP function and the CU-UP function are deployed on a third network device, the downlink transmission requirement or the downlink transmission parameter of the first terminal may specifically indicate the second network device to send the first downlink data to the third network device.

In an example, the first indication information may further indicate to buffer first downlink data of the one or more radio bearers of the first terminal.

In an example, a transmission mode of a first radio bearer may be an acknowledged mode, or quality of service of a first radio bearer may meet a first transmission requirement. The first transmission requirement may be specifically a downlink lossless transmission requirement.

In an example, the first indication information may include an identifier of the first radio bearer. In another embodiment, the first indication information may indicate the first radio bearer in another manner. This is not limited in this embodiment of this application.

In a possible case, the method may further include: determining a receiving status of the downlink data of the one or more radio bearers of the first terminal; and sending a part or all of the first downlink data to the fourth network device based on the receiving status, where the fourth network device is a target network device to which the first terminal switches from the second network device. The fourth network device herein may be understood as the target network device. For example, when the CU-CP function and the CU-UP function of the target network device are deployed separately, the target network device may be the fourth network device, configured to implement the CU-UP function. When the CU-CP function and the CU-UP function of the target network device are not deployed separately, the target network device may be the third network device, configured to implement the CU-CP function and the CU-UP function of the target network device.

In a possible case, the method may further include: receiving second indication information from the first network device, where the second indication information includes the receiving status of the downlink data of the one or more radio bearers of the first terminal.

In a possible case, the method may further include: receiving a sixth message from the fourth network device, where the sixth message includes the receiving status of the downlink data of the one or more radio bearers of the first terminal.

For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet.

In an example, the receiving status of the downlink data of the one or more radio bearers of the first terminal may be from the first terminal.

In a possible case, the method may further include: receiving third indication information from the first network device, where the third indication information indicates the second network device to stop buffering the first downlink data; and stopping buffering the first downlink data.

In a possible case, the method may further include: discarding a data packet in the buffered first downlink data based on a data amount buffer threshold of the second network device, where buffer space after the packet discarding is used to buffer a data packet in newly arriving first downlink data.

In a possible case, the method may further include: receiving fourth indication information from the first network device, where the fourth indication information includes the data amount buffer threshold of the second network device.

According to a third aspect, an embodiment of this application provides a data transmission method. The method may be performed by a third network device, or may be performed by a component of the third network device, for example, a chip or a processor. In the method, a first terminal switches from a first network device to the third network device, and the first terminal communicates with the first network device through a relay device. The third network device may determine a receiving status of downlink data of the first terminal; and sends a second message to the first network device based on the receiving status, where the second message includes the receiving status of the downlink data of the one or more radio bearers of the first terminal.

For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In a possible case, the method may further include: sending fifth indication information to a fourth network device, where the fourth network device is a target network device to which the first terminal switches, and the fifth indication information indicates a downlink transmission requirement or a downlink transmission parameter of the first terminal.

In an example, the fifth indication information may include the identifier of the one or more radio bearers of the first terminal.

In an example, determining the receiving status of the downlink data of the one or more radio bearers of the first terminal may further include: receiving sixth indication information from the fourth network device, where the sixth indication information indicates the receiving status of the downlink data of the one or more radio bearers of the first terminal; and determining the receiving status of the downlink data of the one or more radio bearers of the first terminal based on the sixth indication information.

In a possible case, the method may further include: receiving a first message from the first network device, where the first message indicates the downlink transmission requirement or the downlink transmission parameter of the first terminal.

In an example, the first message may include the identifier of the one or more radio bearers of the first terminal.

In an example, a transmission mode of a first radio bearer may be an acknowledged mode, or quality of service of a first radio bearer may meet a first transmission requirement.

In an example, the first message may be further used to request to hand over the first terminal to the third network device.

According to a fourth aspect, an embodiment of this application provides a data transmission method. The method may be performed by a third network device, or may be performed by a component of the fourth network device, for example, a chip or a processor. In the method, a first terminal switches from a first network device to the third network device, and the first terminal communicates with the first network device through a relay device. The third network device receives a first message from the first network device, where the first message includes a downlink transmission requirement or a downlink transmission parameter of the first terminal; and sends seventh indication information to a fourth network device, where the fourth network device is a target network device to which the first terminal switches, and the seventh indication information indicates the downlink transmission requirement or the downlink transmission parameter of the first terminal.

In an example, the seventh indication information may include an identifier of one or more radio bearers of the first terminal.

In a possible case, the method may further include: sending eighth indication information to the fourth network device, where the eighth indication information indicates the fourth network device to establish a user plane tunnel from the fourth network device to the first network device, the user plane tunnel is used to send a sixth message from the fourth network device to the first network device, and the sixth message includes a receiving status of one or more radio bearers of downlink data of the first terminal. In another possible case, when a CU-CP function and a CU-UP function of a source network device are deployed separately, the source network device is represented as the first network device and a second network device. The eighth indication information may specifically indicate the fourth network device to establish a user plane tunnel from the fourth network device to the second network device, the user plane tunnel is used to send a sixth message from the fourth network device to the second network device, and the sixth message includes a receiving status of one or more radio bearers of downlink data of the first terminal.

In an example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

According to a fifth aspect, an embodiment of this application provides a data transmission method. The method may be performed by a fourth network device, or may be performed by a component of the fourth network device, for example, a chip or a processor. In the method, a first terminal switches to the fourth network device, and the first terminal communicates with a source network device through a relay device. The fourth network device determines a receiving status of downlink data of one or more radio bearers of the first terminal; and sends sixth indication information to a third network device based on the receiving status, where the third network device is a target network device to which the first terminal switches, and the sixth indication information indicates the receiving status of the downlink data of the one or more radio bearers of the first terminal. When a CU-CP function and a CU-UP function of a source network device are not deployed separately, the source network device may be a first network device, configured to implement the CU-CP function and the CU-UP function. When a CU-CP function and a CU-UP function of a source network device are deployed separately, the source network device may include a first network device and a second network device, the first network device may be configured to implement the CU-CP function, and the second network device may be configured to implement the CU-UP function.

In a possible case, the method may further include: receiving a seventh message from the first terminal, where the seventh message includes the receiving status of the downlink data of the one or more radio bearers of the first terminal.

In an example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In a possible case, the method may further include: receiving fifth indication information from the third network device, where the fifth indication information indicates a downlink transmission requirement or a downlink transmission parameter of the first terminal.

In an example, the fifth indication information may include the identifier of the one or more radio bearers of the first terminal.

According to a sixth aspect, an embodiment of this application provides a data transmission method. The method may be performed by a fourth network device, or may be performed by a chip having a similar function to the fourth network device. In the method, a first terminal switches to the fourth network device, and the first terminal communicates with a second network device through a relay device. The fourth network device determines a receiving status of downlink data of one or more radio bearers of the first terminal; and sends a sixth message to the second network device, where the sixth message includes the receiving status of the downlink data of the one or more radio bearers of the first terminal.

In a possible case, the method may further include: receiving a seventh message from the first terminal, where the seventh message includes the receiving status of the downlink data of the one or more radio bearers of the first terminal.

In an example, the receiving status may include at least one of the following content:
an identifier of the one or more radio bearers of the first terminal;
a sequence number of a first unsuccessfully received data packet corresponding to the one or more radio bearers; or
bitmap information corresponding to the one or more radio bearers, where the bitmap information indicates receiving statuses of N subsequent data packets starting from the first unsuccessfully received data packet, and N is an integer greater than or equal to 1.

In a possible case, the method may further include: receiving seventh indication information from a third network device, where the third network device is a target network device to which the first terminal switches, and the seventh indication information indicates a downlink transmission requirement or a downlink transmission parameter of the radio bearer of the first terminal.

In a possible case, when a CU-CP function and a CU-UP function of a source network device are deployed separately, the source network device is represented as a first network device and the second network device, the first network device may be configured to implement the CU-CP function, and the second network device may be configured to implement the CU-UP function. The method may further include: establishing a user plane tunnel from the fourth network device to the second network device, where the second network device is a source network device to which the first terminal switches, the user plane tunnel is used to send the sixth message from the fourth network device to the second network device, and the sixth message includes the receiving status of the downlink data of the one or more radio bearers of the first terminal.

In another possible case, when a CU-CP function and a CU-UP function of a source network device are not deployed separately, the source network device is represented as a first network device, configured to implement the CU-CP function and the CU-UP function. The method may further include: establishing a user plane tunnel from the fourth network device to the first network device, where the first network device is a source network device to which the first terminal switches, the user plane tunnel is used to send the sixth message from the fourth network device to the first network device, and the sixth message includes the receiving status of the downlink data of the one or more radio bearers of the first terminal.

In a possible case, the method may further include: receiving eighth indication information from the third network device, where the third network device is the target network device to which the first terminal switches, and the eighth indication information indicates the fourth network device to establish the user plane tunnel from the fourth network device to the second network device.

According to a seventh aspect, an embodiment of this application provides a communication apparatus. The communication apparatus may include a processing unit and a transceiver unit. A first terminal communicates with the first network device through a relay device, and the first network device may be a control plane of a central unit of a source base station.

The processing unit is configured to determine that the first terminal switches from the first network device to a third network device; and the transceiver unit is configured to send first indication information to a second network device, where the first terminal communicates with the second network device through the relay device, the first indication information indicates a downlink transmission requirement or a downlink transmission parameter of the first terminal, the downlink transmission requirement or the downlink transmission parameter of the first terminal indicates the second network device to send first downlink data to the third network device, and the first downlink data includes downlink data for which a reception success acknowledgment indication is received from the relay device. Optionally, the first downlink data includes downlink data of one or more radio bearers of the first terminal.

In an example, the first indication information may further indicate to buffer first downlink data of the one or more radio bearers of the first terminal. For example, the first indication information may include an identifier of a first radio bearer.

In a possible case, the transceiver unit is configured to send a first message to the third network device, where the first message includes the downlink transmission requirement or the downlink transmission parameter of the first terminal.

In an example, the first message may include an identifier of the one or more radio bearers of the first terminal. For example, a transmission mode of the first radio bearer is an acknowledged mode, or quality of service of the first radio bearer meets a first transmission requirement.

In a possible case, the first message is further used to request to hand over the first terminal to the third network device. That is, the first message may be a handover request message from the first network device. It should be understood that this is merely an example for describing an implementation of the first message, but is not any limitation. During specific implementation, the first message may also be, for example, an E1 message that is newly added between the first network device and the third network device and that indicates a downlink lossless transmission requirement or a downlink lossless transmission parameter of the first terminal.

In a possible case, the transceiver unit is further configured to send second indication information to the second network device, where the second indication information includes a receiving status of the downlink data of the one or more radio bearers of the first terminal.

In a possible case, the processing unit is further configured to determine a receiving status of the downlink data of the one or more radio bearers of the first terminal; and that the transceiver unit sends the second indication information to the second network device includes: sending the second indication information to the second network device based on the receiving status.

In an example, the transceiver unit is further configured to receive a second message from the third network device, where the second message includes a receiving status of the downlink data of the one or more radio bearers of the first terminal. For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In an example, the receiving status of the downlink data of the one or more radio bearers of the first terminal may be from the first terminal.

In a possible case, the transceiver unit is further configured to send third indication information to the second network device, where the third indication information indicates the second network device to stop buffering the first downlink data.

In an example, that the transceiver unit sends the third indication information to the second network device may include: receiving a third message, where the third message indicates to release a terminal context; or the third message indicates to release a connection between the first network device and a core network device; and sending the third indication information to the second network device.

In an example, that the transceiver unit sends the third indication information to the second network device may include: sending a fourth message to the first terminal, where the fourth message indicates the first terminal to switch from the first network device to the third network device, and/or indicates the first terminal to switch from the second network device to the fourth network device; and sending the third indication information to the second network device.

In an example, that the transceiver unit sends the third indication information to the second network device may include: receiving a fifth message from the first terminal, where the fifth message is used to acknowledge that the first terminal switches from the first network device to the third network device, and/or acknowledge that the first terminal switches from the second network device to the fourth network device; and sending the third indication information to the second network device.

In a possible case, the transceiver unit is further configured to send fourth indication information to the second network device, where the fourth indication information includes a data amount buffer threshold of the second network device.

According to an eighth aspect, an embodiment of this application provides a communication apparatus. The communication apparatus may include a processing unit and a transceiver unit. A first terminal communicates with the second network device through a relay device. The transceiver unit is configured to receive first indication information from a first network device, where the first terminal communicates with the first network device through the relay device, the first indication information indicates a downlink transmission requirement or a downlink transmission parameter of the first terminal, the downlink transmission requirement or the downlink transmission parameter of the first terminal indicates the second network device to send first downlink data to a fourth network device, and the first downlink data includes downlink data for which a reception success acknowledgment indication is received from the relay device; and the processing unit is configured to buffer the first downlink data of the first terminal. Optionally, the first downlink data includes downlink data of one or more radio bearers of the first terminal.

In an example, the first indication information may indicate to buffer first downlink data of the one or more radio bearers of the first terminal.

In an example, a transmission mode of a first radio bearer may be an acknowledged mode, or quality of service of a first radio bearer may meet a first transmission requirement. The first transmission requirement may be specifically a downlink lossless transmission requirement.

In an example, the first indication information may further include an identifier of the first radio bearer. In another embodiment, the first indication information may indicate the first radio bearer in another manner. This is not limited in this embodiment of this application.

In a possible case, the processing unit is configured to determine a receiving status of the downlink data of the one or more radio bearers of the first terminal; and the transceiver unit is configured to send a part or all of the first downlink data to the fourth network device based on the receiving status, where the fourth network device is a target network device to which the first terminal switches from the second network device.

In a possible case, the transceiver unit is further configured to receive second indication information from the first network device, where the second indication information includes the receiving status of the downlink data of the one or more radio bearers of the first terminal.

In a possible case, the transceiver unit is further configured to receive a sixth message from the fourth network device, where the sixth message includes the receiving status of the downlink data of the one or more radio bearers of the first terminal.

For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet.

In an example, the receiving status of the downlink data of the one or more radio bearers of the first terminal may be from the first terminal.

In a possible case, the transceiver unit is further configured to receive third indication information from the first network device, where the third indication information indicates the second network device to stop buffering the first downlink data; and stop buffering the first downlink data.

In a possible case, the transceiver unit is further configured to discard a data packet in the buffered first downlink data based on a data amount buffer threshold of the second network device, where buffer space after the packet discarding is used to buffer a data packet in newly arriving first downlink data.

In a possible case, the transceiver unit is further configured to receive fourth indication information from the first network device, where the fourth indication information includes the data amount buffer threshold of the second network device.

According to a ninth aspect, an embodiment of this application provides a communication apparatus. The communication apparatus may include a processing unit and a transceiver unit.

A first terminal switches from a first network device to the third network device, and the first terminal communicates with the first network device through a relay device. The processing unit is configured to determine a receiving status of downlink data of the first terminal; and the transceiver unit is configured to send a second message to the first network device based on the receiving status, where the second message includes the receiving status of the downlink data of the one or more radio bearers of the first terminal.

For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In a possible case, the transceiver unit is further configured to send fifth indication information to a fourth network device, where the fourth network device is a target network device to which the first terminal switches, and the fifth indication information indicates a downlink transmission requirement or a downlink transmission parameter of the first terminal.

In an example, the fifth indication information may include the identifier of the one or more radio bearers of the first terminal.

In an example, the transceiver unit is further configured to receive sixth indication information from the fourth network device, where the sixth indication information indicates the receiving status of the downlink data of the one or more radio bearers of the first terminal; and the processing unit is further configured to determine the receiving status of the downlink data of the one or more radio bearers of the first terminal based on the sixth indication information.

In a possible case, the transceiver unit is further configured to receive a first message from the first network device, where the first message indicates the downlink transmission requirement or the downlink transmission parameter of the first terminal.

In an example, the first message may include the identifier of the one or more radio bearers of the first terminal.

In an example, a transmission mode of a first radio bearer may be an acknowledged mode, or quality of service of a first radio bearer may meet a first transmission requirement.

In an example, the first message may be further used to request to hand over the first terminal to the third network device.

According to a tenth aspect, an embodiment of this application provides a communication apparatus. The communication apparatus may include a processing unit and a transceiver unit. A first terminal switches from a first network device to the third network device, and the first terminal communicates with the first network device through a relay device. The transceiver unit is configured to receive a first message from the first network device, where the first message includes a downlink transmission requirement or a downlink transmission parameter of the first terminal; and send seventh indication information to a fourth network device, where the fourth network device is a target network device to which the first terminal switches, and the seventh indication information indicates the downlink transmission requirement or the downlink transmission parameter of the first terminal.

In an example, the seventh indication information may include an identifier of one or more radio bearers of the first terminal.

In a possible case, when a CU-CP function and a CU-UP function of a source network device are not deployed separately, the source network device is represented as the first network device, and the first network device may be configured to implement the CU-CP function and the CU-UP function. The transceiver unit is further configured to send eighth indication information to the fourth network device, where the eighth indication information indicates the fourth network device to establish a user plane tunnel from the fourth network device to the first network device, the user plane tunnel is used to send a sixth message from the fourth network device to the first network device, and the sixth message includes a receiving status of one or more radio bearers of downlink data of the first terminal. In another possible case, when a CU-CP function and a CU-UP function of a source network device are deployed separately, the source network device is represented as the first network device and a second network device, the first network device may be configured to implement the CU-CP function, and the second network device may be configured to implement the CU-UP function. The eighth indication information may specifically indicate the fourth network device to establish a user plane tunnel from the fourth network device to the second network device, the user plane tunnel is used to send a sixth message from the fourth network device to the second network device, and the sixth message includes a receiving status of one or more radio bearers of downlink data of the first terminal.

In an example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

According to an eleventh aspect, an embodiment of this application provides a communication apparatus. The communication apparatus may include a processing unit and a transceiver unit. A first terminal switches to the fourth network device, and the first terminal communicates with a source network device through a relay device. The processing unit is configured to determine a receiving status of downlink data of one or more radio bearers of the first terminal; and the transceiver unit is configured to send sixth indication information to a third network device based on the receiving status, where the third network device is a target network device to which the first terminal switches, and the sixth indication information indicates the receiving status of the downlink data of the one or more radio bearers of the first terminal. When a CU-CP function and a CU-UP function of a source network device are deployed separately, the source network device may be a first network device, configured to implement the CU-CP function.

In a possible case, the transceiver unit is further configured to receive a seventh message from the first terminal, where the seventh message includes the receiving status of the downlink data of the one or more radio bearers of the first terminal.

In an example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In a possible case, the transceiver unit is further configured to receive fifth indication information from the third network device, where the fifth indication information indicates a downlink transmission requirement or a downlink transmission parameter of the first terminal.

In an example, the fifth indication information may include the identifier of the one or more radio bearers of the first terminal.

According to a twelfth aspect, an embodiment of this application provides a communication apparatus. The communication apparatus may include a processing unit and a transceiver unit. A first terminal switches to the fourth network device, and the first terminal communicates with a second network device through a relay device. The processing unit is configured to determine a receiving status of downlink data of one or more radio bearers of the first terminal; and the transceiver unit is configured to send a sixth message to the second network device, where the sixth message includes the receiving status of the downlink data of the one or more radio bearers of the first terminal.

In a possible case, the transceiver unit is further configured to receive a seventh message from the first terminal, where the seventh message includes the receiving status of the downlink data of the one or more radio bearers of the first terminal.

In an example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In a possible case, the transceiver unit is further configured to receive seventh indication information from a third network device, where the third network device is a target network device to which the first terminal switches, and the seventh indication information indicates a downlink transmission requirement or a downlink transmission parameter of the radio bearer of the first terminal.

In a possible case, when a CU-CP function and a CU-UP function of a source network device are deployed separately, the source network device is represented as a first network device and the second network device, the first network device may be configured to implement the CU-CP function, and the second network device may be configured to implement the CU-UP function. The processing unit is further configured to establish a user plane tunnel from the fourth network device to the second network device, where the second network device is a source network device to which the first terminal switches, the user plane tunnel is used to send the sixth message from the fourth network device to the second network device, and the sixth message includes the receiving status of the downlink data of the one or more radio bearers of the first terminal. In another possible case, when a CU-CP function and a CU-UP function of a source network device are not deployed separately, the source network device is represented as a first network device, configured to implement the CU-CP function and the CU-UP function. The processing unit is further configured to establish a user plane tunnel from the fourth network device to the first network device, where the first network device is a source network device to which the first terminal switches, the user plane tunnel is used to send the sixth message from the fourth network device to the first network device, and the sixth message includes the receiving status of the downlink data of the one or more radio bearers of the first terminal. In a possible case, the transceiver unit is further configured to receive eighth indication information from the third network device, where the third network device is the target network device to which the first terminal switches, and the eighth indication information indicates the fourth network device to establish the user plane tunnel from the fourth network device to the second network device.

According to a thirteenth aspect, an embodiment of this application provides a communication apparatus, including at least one processor, and the at least one processor is configured to invoke a computer program or instructions in a memory, to perform the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, the method according to any one of the fifth aspect or the possible designs of the fifth aspect, or the method according to any one of the sixth aspect or the possible designs of the sixth aspect.

Optionally, the communication apparatus may include the memory, and the memory is configured to store the computer program or the instructions.

According to a fourteenth aspect, an embodiment of this application provides a chip system. The chip system includes at least one processor, and the at least one processor is configured to invoke one or more computer programs or instructions in a memory, to implement the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, the method according to any one of the fifth aspect or the possible designs of the fifth aspect, or the method according to any one of the sixth aspect or the possible designs of the sixth aspect.

According to a fifteenth aspect, an embodiment of this application provides a communication system, including a communication apparatus configured to implement the method according to any one of the seventh aspect or the possible designs of the seventh aspect, a communication apparatus configured to implement the method according to any one of the eighth aspect or the possible designs of the eighth aspect, a communication apparatus configured to implement the method according to any one of the ninth aspect or the possible designs of the ninth aspect, a communication apparatus configured to implement the method according to any one of the tenth aspect or the possible designs of the tenth aspect, a communication apparatus configured to implement the method according to any one of the eleventh aspect or the possible designs of the eleventh aspect, or a communication apparatus configured to implement the method according to any one of the twelfth aspect or the possible designs of the twelfth aspect.

According to a sixteenth aspect, an embodiment of this application provides a communication system, including one or more of the following: a network device configured to implement the method according to any one of the first aspect or the possible designs of the first aspect, a network device configured to implement the method according to any one of the second aspect or the possible designs of the second aspect, a network device configured to implement the method according to any one of the third aspect or the possible designs of the third aspect, a network device configured to implement the method according to any one of the fourth aspect or the possible designs of the fourth aspect, a network device configured to implement the method according to any one of the fifth aspect or the possible designs of the fifth aspect, or a network device configured to implement the method according to any one of the sixth aspect or the possible designs of the sixth aspect.

According to a seventeenth aspect, an embodiment of this application provides a computer-readable storage medium. The computer-readable storage medium stores computer executable instructions, and when the computer executable instructions are invoked by an electronic apparatus, the electronic apparatus is caused to perform the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, the method according to any one of the fifth aspect or the possible designs of the fifth aspect, or the method according to any one of the sixth aspect or the possible designs of the sixth aspect.

According to an eighteenth aspect, an embodiment of this application provides a computer program product. The computer program product includes computer executable instructions, and when the computer executable instructions are run on a computer, the computer is caused to perform the method according to any one of the first aspect or the possible designs of the first aspect, the method according to any one of the second aspect or the possible designs of the second aspect, the method according to any one of the third aspect or the possible designs of the third aspect, the method according to any one of the fourth aspect or the possible designs of the fourth aspect, the method according to any one of the fifth aspect or the possible designs of the fifth aspect, or the method according to any one of the sixth aspect or the possible designs of the sixth aspect.

Based on the implementations provided in the foregoing aspects, embodiments of this application may be further combined to provide more implementations.

For technical effects that can be achieved in any possible implementation of any one of the second aspect to the eighteenth aspect, refer to the descriptions of the technical effects that can be achieved in any possible implementation of the first aspect. Repeated parts are not described.

### BRIEF DESCRIPTION OF DRAWINGS

FIG. 1 is a diagram of an architecture of a communication system to which an embodiment of this application is applied;
FIG. 2 is a diagram of a structure of a PDCP status report;
FIG. 3 is a diagram of a communication architecture of SL U2N relay;
FIG. 4 is a diagram of a protocol stack of L2 SL U2N relay;
FIGS. 5A, 5B, 5C are diagrams of an intra-base station switching scenario;
FIGS. 6A, 6B, 6C are diagrams of an inter-base station switching scenario;
FIG. 7 is a diagram of a communication interface;
FIG. 8 is a diagram of a protocol stack;
FIG. 9 is a diagram of a CP-UP separation architecture of a CU;
FIG. 10 is a schematic flowchart of implementing a data forwarding mechanism in an inter-base station switching scenario;
FIGS. 11A, 11B are diagrams of packet loss;
FIG. 12 is a schematic flowchart of a data transmission method according to an embodiment of this application;
FIG. 13 is a schematic flowchart of a data transmission method according to an embodiment of this application;
FIG. 14 is a schematic flowchart of a data transmission method according to an embodiment of this application;
FIG. 15 is a schematic flowchart of a data transmission method according to an embodiment of this application;
FIG. 16 is a schematic flowchart of a data transmission method according to an embodiment of this application;
FIG. 17 is a diagram of a communication apparatus according to an embodiment of this application; and
FIG. 18 is a diagram of a communication apparatus according to an embodiment of this application.

### DESCRIPTION OF EMBODIMENTS

The following describes technical solutions in embodiments of this application with reference to the accompanying drawings in embodiments of this application.

To clearly describe the technical solutions in embodiments of this application, terms such as "first" and "second" are used in embodiments of this application to distinguish between same items or similar items that provide basically same functions or purposes. For example, first information and second information are merely used to distinguish between different information, and do not limit a sequence of the first information and the second information. A person skilled in the art may understand that the terms such as "first" and "second" do not limit a quantity or an execution sequence, and the terms such as "first" and "second" do not indicate a definite difference.

In embodiments of this application, "at least one" means one or more, and "a plurality of' means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

For ease of understanding of a data transmission method provided in embodiments of this application, the following describes a system architecture and an application scenario of the data transmission method provided in embodiments of this application. It may be understood that the system architecture and the application scenario described in embodiments of this application are intended to describe the technical solutions in embodiments of this application more clearly, and do not constitute a limitation on the technical solutions provided in embodiments of this application.

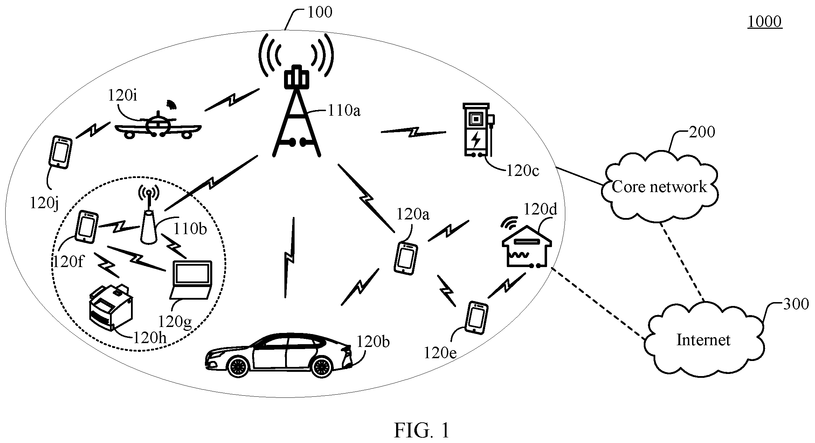

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different independent physical devices, or functions of the core network device and logical functions of the radio access network device may be integrated into a same physical device, or some functions of the core network device and some functions of the radio access network device may be integrated into one physical device. A wired or wireless manner may be used for connection between terminals and between radio access network devices. FIG. 1 is merely an example diagram. The communication system may further include other network devices, for example, a wireless relay device and a wireless backhaul device, which are not shown in FIG. 1.

The radio access network device may be a device with a wireless transceiver function. The radio access network device may be a device that provides a wireless communication function service, usually located on a network side, and including but not limited to: a next-generation NodeB (gNodeB, gNB) in a 5th generation (5th generation, 5G) communication system, a next-generation base station in a 6th generation (6th generation, 6G) mobile communication system, a base station in a future mobile communication system, an access node in a Wi-Fi system, an evolved NodeB (evolved NodeB, eNB) in an LTE system, a radio network controller (radio network controller, RNC), a NodeB (NodeB, NB), a base station controller (base station controller, BSC), a home base station (for example, a home evolved NodeB or a home NodeB, HNB), a baseband unit (base band unit, BBU), a transmission reception point (transmission reception point, TRP), a transmission point (transmission point, TP), a base transceiver station (base transceiver station, BTS), and the like.

In a network structure, the access network device may include a central unit (central unit, CU) node, a distributed unit (distributed unit, DU) node, a RAN device including a CU node and a DU node, a RAN device including a control plane CU node, a user plane CU node, and a DU node, or a RAN device including a radio unit (radio unit, RU). In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of a software module and a hardware module.

The access network device provides a service for a cell. A user equipment communicates with a base station by using a transmission resource (for example, a frequency domain resource or a frequency spectrum resource) used for the cell. The cell may be a cell corresponding to the base station (for example, a base station). The cell may belong to a macro base station, or may belong to a base station corresponding to a small cell (small cell). The small cell herein may include a metro cell (metro cell), a micro cell (micro cell), a pico cell (pico cell), a femto cell (femto cell), or the like. These small cells are characterized by small coverage and low transmit power, and are applicable to providing a high-rate data transmission service. The radio access network device may be a macro base station (for example, 110a in FIG. 1), may be a micro base station or an indoor base station (for example, 110b in FIG. 1), or may be a relay node or a donor node, a device that provides a wireless communication service for a user equipment in a V2X communication system, a radio controller in a cloud radio access network (cloud radio access network, CRAN) scenario, a relay station, a vehicle-mounted device, a wearable device, a network device in a future evolved network, or the like. A specific technology and a specific device form that are used by the radio access network device are not limited in embodiments of this application. For ease of description, the following provides descriptions by using an example in which the radio access network device is a base station.

The terminal may also be referred to as a terminal device, a user equipment (user equipment, UE), a mobile station (mobile station, MS), a mobile terminal (mobile terminal, MT), or the like, and may be an entity configured to receive or transmit a signal on a user side, for example, a mobile phone. The terminal device may be a user equipment (user equipment, UE). The UE includes a handheld device, a vehicle-mounted device, a wearable device, or a computing device with a wireless communication function. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in smart grid, a wireless terminal in smart city (smart city), a wireless terminal in smart home (smart home), or the like. The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, self-driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, or the like. In embodiments of this application, an apparatus configured to implement a function of the terminal may be a terminal, or may be an apparatus that can support the terminal in implementing the function, for example, a chip system, a communication module, or a modem. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus configured to implement the function of the terminal is the terminal and the terminal is a UE. A specific technology and a specific device form that are used by the terminal device are not limited in embodiments of this application.

Optionally, the UE may alternatively be configured to serve as a base station. For example, the UE may serve as a scheduling entity that provides a sidelink signal between UEs in vehicle-to-everything (vehicle-to-everything, V2X), device-to-device (device-to-device, D2D), or peer-to-peer (peer to peer, P2P).

The base station and the terminal may be fixed or mobile. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the helicopter or uncrewed aerial vehicle 120i in FIG. 1 may be configured as a mobile base station. For the terminal 120j accessing the radio access network 100 via 120i, 120i is a base station. However, for the base station 110a, 120i is a terminal. In other words, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, and 110a, 110b, and 120a to 120j in FIG. 1 may be referred to as communication apparatuses that have respective corresponding functions, for example, communication apparatuses having a base station function or communication apparatuses having a terminal function.

Communication between a base station and a terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, the function of the base station may be performed by a module (for example, a chip) in the base station, or may be performed by a control subsystem including the function of the base station. The control subsystem including the function of the base station herein may be a control center in the foregoing application scenarios of the terminal, such as smart grid, industrial control, smart transportation, and smart city. The function of the terminal may be performed by a module (for example, a chip or a modem) in the terminal, or may be performed by an apparatus including the function of the terminal.

For ease of understanding of the solutions in embodiments of this application, the following first describes nouns or terms in embodiments of this application.

### 1. Sidelink (sidelink) communication:

In a wireless communication system, data communication may be performed between UEs over a network, or communication between UEs may be directly performed without using a network. An interface between UEs is referred to as a PC5 interface, which is similar to a Uu interface between a UE and a base station. A link between UEs is referred to as a sidelink. A typical application scenario of the sidelink communication is vehicle-to-everything (vehicle-to-everything, V2X). In the vehicle-to-everything, each vehicle is one UE, and data communication may be directly performed between UEs through a sidelink without using a network. In this way, a communication delay can be effectively reduced. It may be understood that the sidelink may also be referred to as a sidelink, a sidelink, a sidelink, or the like.

### 2. Broadcast, unicast, and multicast on a sidelink:

Broadcast communication on the sidelink is similar to broadcasting system information by a base station. To be specific, a UE sends data of a broadcast service to the outside without encryption, and any other UE in an effective receiving range that is interested in the broadcast service can receive the data of the broadcast service.

Unicast communication on the sidelink is similar to data communication performed after a radio resource control (radio resource control, RRC) connection is established between a UE and a base station, and a unicast connection needs to be first established between two UEs. After the unicast connection is established, the two UEs may perform data communication based on a negotiated identifier, and data may be encrypted or may not be encrypted.

Multicast communication on the sidelink is communication between all UEs in a communication group, and any UE in the group can receive and send data of a multicast service.

In embodiments of this application, sidelink communication between UEs is not limited to the foregoing broadcast, unicast, or multicast manner.

### 3. Radio bearer (Radio Bearer, RB):

The radio bearer is a general term of a series of protocol entities and configurations allocated by a base station to a UE, including a series of resources allocated by a radio resource control (radio resource control, RRC) or service data adaptation protocol (Service Data Adaptation Protocol, SDAP) protocol entity, a packet data convergence protocol (packet data convergence protocol, PDCP) entity, a radio link control (radio link control, RLC) protocol entity, a medium access control (medium access control, MAC) protocol entity, and a physical layer (PHY). The radio bearer includes a data radio bearer (data radio bearer, DRB) and a signaling radio bearer (signaling radio bearer, SRB). The former is for carrying data, and the latter is used to carry a signaling message. In a sidelink communication scenario, communication between UEs is performed via a sidelink radio bearer (sidelink radio bearer, SLRB), including a sidelink DRB and a sidelink SRB. In the protocol text, a configuration of the radio bearer generally includes only configurations in a PDCP layer and a service data adaptation protocol (service data adaptation protocol, SDAP) layer. A protocol entity below an RLC layer is referred to as an RLC bearer, and a corresponding configuration is provided in an RLC bearer configuration.

### 4. PDCP status report:

In a communication process, a receive end may send a PDCP status report to a transmit end. The PDCP status report may indicate a status of receiving a data packet from the transmit end by the receive end.

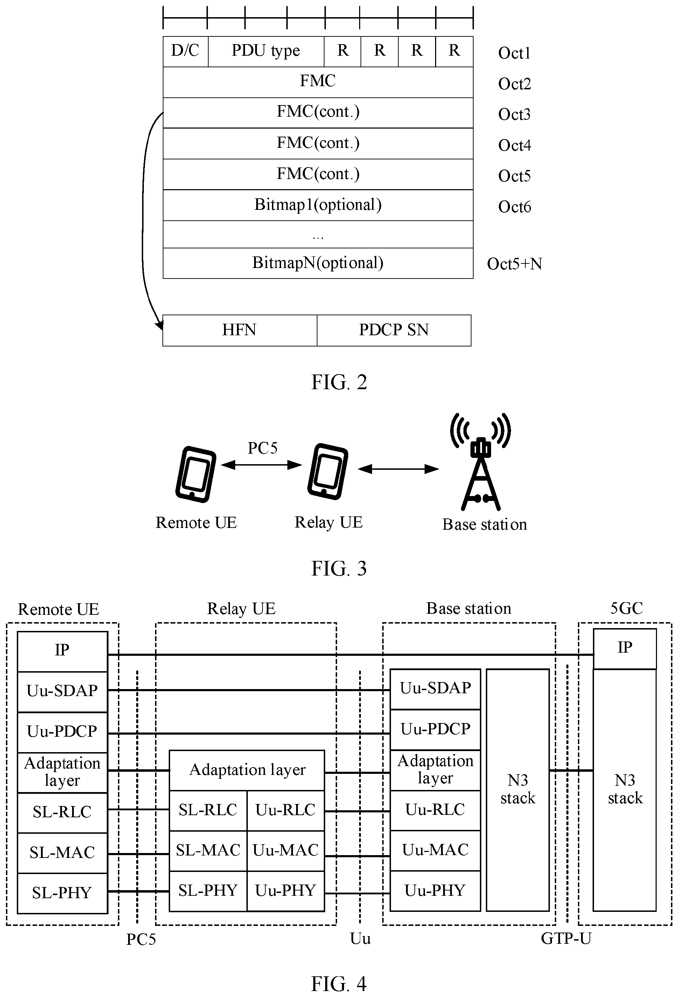

For example, a format of the PDCP status report may be shown in FIG. 2. The format may include 5+N bytes (for example, represented as Oct1 to Oct5 and Oct6 to Oct5+N), and each byte may include 8 bits (bit) used to carry different content, where N is an integer greater than or equal to 1.

For example, the Oct1 field may carry D/C indication information and PDU type (type) indication information. The D/C indication information occupies one bit, which may indicate whether a type of a PDCP PDU is a PDCP data PDU or a PDCP control PDU. If the type of the PDCP PDU is the PDCP control PDU, the PDU type (type) indication information occupies 3 bits, which may indicate a type of the PDCP control PDU. For example, 000 corresponds to a PDCP status report, or 001 corresponds to an interspersed (Interspersed) ROHC feedback (feedback)/ROHC feedback-type PDU. An R field is a reserved bit, which may be all set to 0.

For example, the Oct2 field to the Oct5 field may carry a first missing count (First Missing COUNT, FMC) (cont.), that is, a count corresponding to a first missing PDCP PDU. The count may include two parts: a hyper frame number (Hyper Frame Number, HFN) and a PDCP sequence number (sequence number, SN). The HFN and the SN are sequence numbers allocated by the transmit end to each PDCP PDU.

Optionally (optional), the Oct6 field to the Oct5+N field may carry bitmap (Bitmap) information, and the bitmap includes 0 and 1, which sequentially indicate a receiving status of each PDCP SDU starting from the FMC. 0 represents packet loss, and 1 represents receiving success.

### 5. Sidelink UE-to-network relay (also referred to as sidelink UE-to-Network Relay, SLUE-to-Network Relay, or SL U2N Relay):

The SL U2N relay is a technology in which one UE helps another UE communicate with a base station, and is also referred to as a relay technology. FIG. 3 is a diagram of a communication architecture of SL U2N relay. A remote UE (Remote UE) communicates with a base station in collaboration with a relay UE (Relay UE). The remote UE communicates with the relay UE through a sidelink, and a corresponding interface is referred to as PC5. The relay UE and the base station are directly connected to each other, that is, communicate with each other through a Uu interface.

Embodiments of this application may be applied to a layer 2 (L2) SL U2N relay scenario, which is referred to as L2 SL U2N relay for short below. FIG. 4 is a diagram of a protocol stack of L2 SL U2N relay. A data packet of the remote UE is relayed and forwarded below a PDCP layer of the relay UE. To be specific, the relay UE maintains only a relay RLC bearer, including an RLC layer, a MAC layer, and a PHY layer. Therefore, there is an end-to-end PDCP layer, an end-to-end SDAP layer, and an end-to-end RRC layer between the remote UE and the base station, but there is no end-to-end RLC layer, end-to-end MAC layer, and end-to-end PHY layer between the remote UE and the base station.

In the protocol architecture, a sidelink relay adaptation protocol (sidelink relay adaptation protocol, SRAP) layer is added between the RLC layer and the PDCP layer. The SRAP layer is mainly used for multiplexing and demultiplexing of radio bearers. In other words, multiplexing of different radio bearers onto one RLC bearer and a corresponding demultiplexing process are supported. An RLC bearer between the remote UE and the relay UE is referred to as a PC5 relay RLC channel/bearer, and an RLC bearer between the relay UE and the base station is referred to as a Uu relay RLC channel/bearer.

### 6. Remote UE path switching (remote UE path switching):

A "path" in embodiments of this application is a communication path or a communication link. A remote UE may communicate with a base station through a direct (direct) link, which is referred to as a direct link or a direct link. Alternatively, with the assistance of a relay UE, the remote UE may communicate with the base station through an indirect (indirect) link, which is referred to as an indirect link or an indirect link. The remote UE and the relay UE are located in cell coverage of a same base station. On the direct link, the remote UE directly communicates with the base station through a Uu interface. On the indirect link, the remote UE communicates with the base station through the relay UE. The remote UE may be connected to and communicate with the relay UE through a PC5 interface and a sidelink, or the remote UE may communicate with the relay UE through a non-3GPP link.

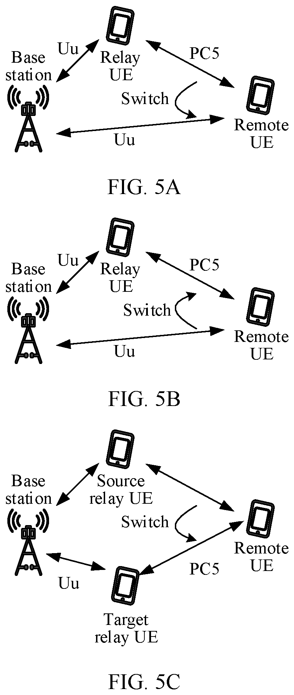

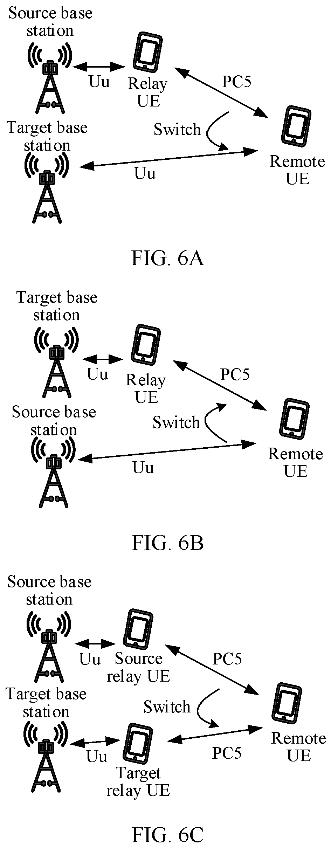

The remote UE in the L2 SL U2N relay has a service continuity requirement, that is, in a connected state, path switching needs to be performed based on a configuration of the base station. For example, in an intra-base station switching scenario shown in FIGS. 5A, 5B, 5C, in FIG. 5A, the remote UE may switch from an indirect link to a direct link; in FIG. 5B, the remote UE may switch from a direct link to an indirect link; and in FIG. 5C, the remote UE may switch from an indirect link to a source relay device to another indirect link to a target relay device in a same base station. Alternatively, in an inter-base station switching scenario shown in FIGS. 6A, 6B, 6C, in FIG. 6A, the remote UE may switch from an indirect link to a source base station to a direct link to a target base station; in FIG. 6B, the remote UE may switch from a direct link to the source base station to an indirect link to the target base station; and in FIG. 6C, the remote UE may switch from the indirect link to the source base station to an indirect link to the target base station.

### 7. CU-DU separation architecture:

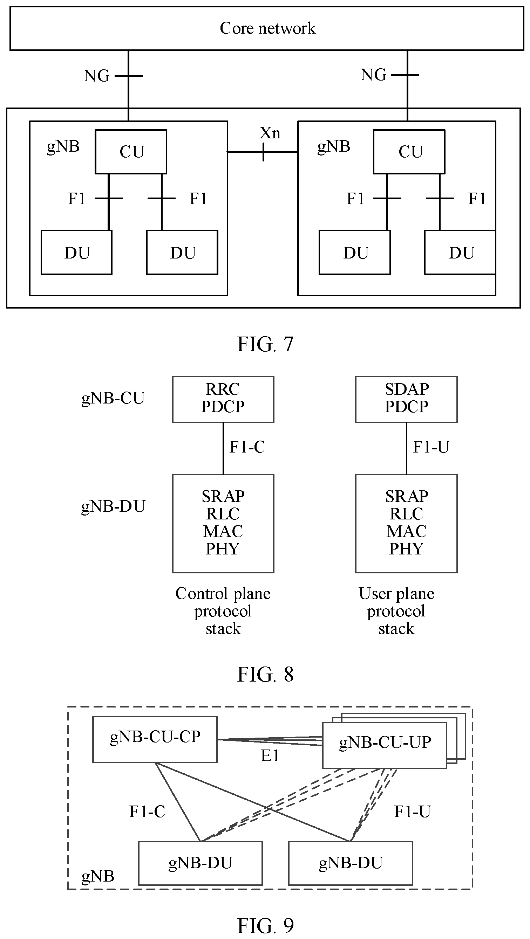

In the CU-DU separation architecture, a base station is divided into a central unit (Central unit, CU) and a distributed unit (Distributed Unit, DU). Some functions of the base station are deployed on the CU, and the remaining functions are deployed on the DU. A plurality of DUs share one CU, thereby reducing costs and facilitating network expansion. As shown in FIG. 7, a gNB-CU and a gNB-DU may be connected through an F1 interface, and a CU-CP represents that a gNB is connected to a core network (EPC or 5GC) through an NG interface.

In the CU-DU separation architecture, as shown in FIG. 8, the gNB-CU is responsible for functions of an RRC protocol layer, an SDAP protocol layer, and a PDCP protocol layer, and the gNB-DU is responsible for functions of an RLC protocol layer, a MAC protocol layer, and a PHY protocol layer. Particularly, an SRAP layer newly introduced in the SL U2N relay is located in the gNB-DU. Further, for a control plane protocol stack (control plane protocol stack), a gNB-CU-CP is responsible for RRC and a PDCP entity corresponding to an SRB; and for a user plane protocol stack (user plane protocol stack), a gNB-CU-UP is responsible for SDAP and a PDCP entity corresponding to a DRB.

### 8. CP-UP separation architecture of the gNB-CU:

The CU may be divided into a control plane (CU-CP) and a user plane (CU-UP). The CU-CP is responsible for a control plane (control plane) function, and mainly includes RRC and PDCP corresponding to a control plane (or an SRB), that is, PDCP-C. The PDCP-C is mainly responsible for data encryption and decryption, integrity protection, data transmission, and the like on the control plane. The CU-UP is responsible for a user plane (user plane) function, and mainly includes SDAP and PDCP corresponding to a user plane (or a DRB), that is, PDCP-U. The SDAP is mainly responsible for processing data of a core network and mapping a flow to a bearer. The PDCP-U is mainly responsible for encryption and decryption, integrity protection, header compression, sequence number maintenance, data transmission, and the like on a data plane. As shown in FIG. 9, the CU-CP and the CU-UP are connected through an E1 interface. The CU-CP is connected to the DU through an F1 interface-control plane, namely, F1-C. The CU-UP is connected to the DU through an F1 interface-user plane, namely, F1-U. Certainly, in another possible implementation, PDCP-C is alternatively in the CU-UP.

### 9. Data forwarding (data forwarding) mechanism:

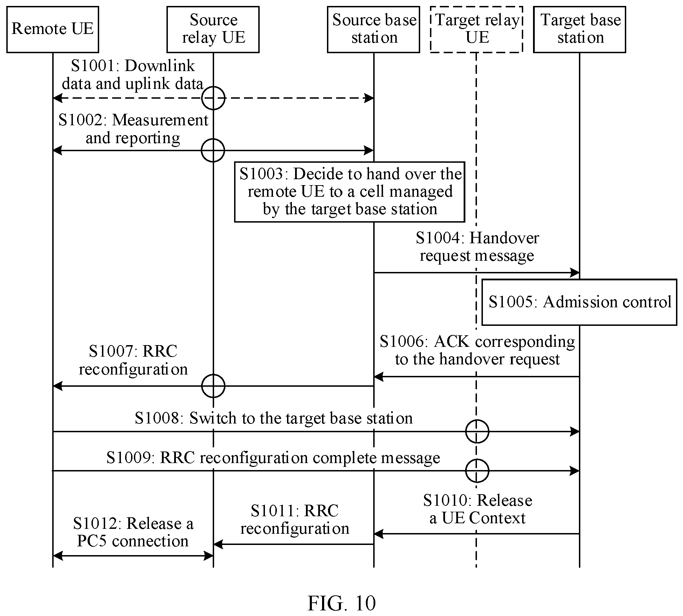

Using the inter-base station switching scenario in the case (a) shown in FIGS. 6A, 6B, 6C as an example, as shown in FIG. 10,a path switching procedure of the remote UE may include the following steps.

S1001: With assistance of a source relay UE, a remote UE performs uplink (uplink, UL) data transmission and downlink (downlink, DL) data transmission with a source base station through a source link (that is, an indirect link based on the source relay UE).

S1002: The remote UE performs measurement (measurement) and reporting (report) based on a configuration of the source base station.

For example, if the remote UE learns, through measurement, that sidelink signal quality of a current serving relay UE (that is, the source relay UE) is poor, and there is a more suitable cell nearby, the remote UE triggers measurement and reporting, so that the source base station switches a communication path for the remote UE.

S1003: The source base station decides (decision), based on measurement report information of the remote UE, to hand over the remote UE to a cell managed by a target base station.

S1004: The source base station sends a handover (handover, HO) request (request) message to the target base station, where the message may carry configuration information of the remote UE on the source base station side.

S1005: The target base station performs admission control (admission control), and decides to perform handover of the remote UE.

S1006: The target base station sends an acknowledgment (acknowledgment, ACK) message corresponding to the handover request to the source base station, where the ACK message carries radio resource control (radio resource control, RRC) configuration information of the remote UE on the target base station side.

S1007: With assistance of the source relay UE, the source base station sends an RRC reconfiguration message to the remote UE through an indirect link, where the RRC reconfiguration message indicates the remote UE to access a target cell managed by the target base station, and the RRC reconfiguration message includes information such as cell ID information of the target cell.

S1008: The remote UE accesses, based on the received RRC reconfiguration message, the target cell managed by the target base station.

S1009: The remote UE sends an RRC reconfiguration complete message to the target base station.

S1010: The target base station indicates the source base station to release (release) a UE context of the remote UE.

S1011: The source base station sends the RRC reconfiguration message to the source relay UE, to indicate the source relay UE to release the remote UE and a relay-related configuration.

S1012: The source relay UE or the remote UE triggers a procedure of releasing a PC5 connection.

In the foregoing handover process, data transmission continuity is implemented between base stations in a data forwarding manner.

Specifically, before performing S1007, the source base station maintains a connection to the remote UE, and sends downlink data to the remote UE through an indirect link between the source base station and the remote UE. After S1007, the source base station sends the downlink data to the target base station in a data forwarding manner, that is, sends the downlink data of the remote UE through an Xn interface on a GTP-U tunnel. The GTP-U tunnel may be configured by the target base station as indicated by the source base station in S1004 to S1006, and data of each radio bearer is transmitted on one GTP-U tunnel. After the remote UE successfully accesses the target base station, the target base station may send, to the remote UE, the downlink data sent by the source base station, that is, complete data forwarding. This technology may cause packet loss.

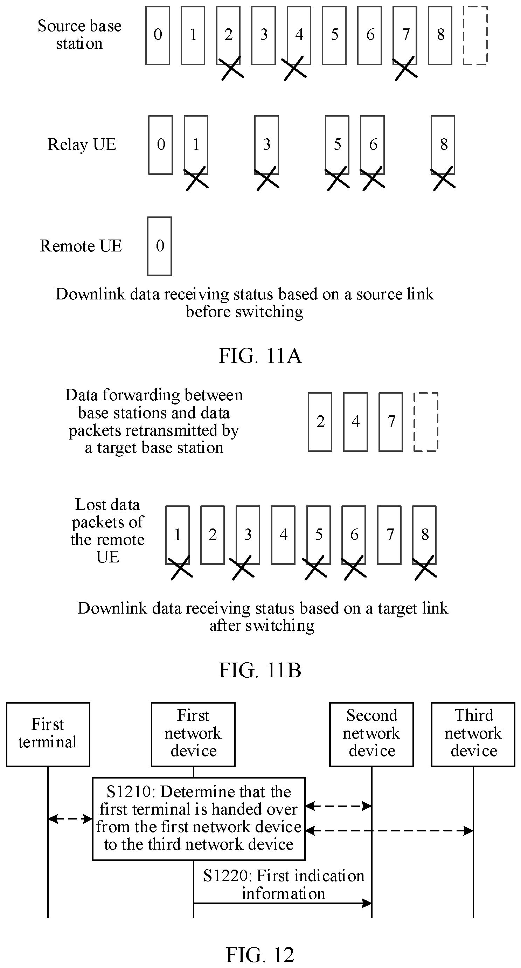

In a possible case of downlink data transmission on the source link, as shown in FIG. 11A, one rectangular box represents one downlink data packet. It is assumed that before the source base station sends the RRC reconfiguration information to the remote UE based on the source link (corresponding to S1007), the source base station sends downlink data packets numbered 0 to 8 to the relay UE, and receives, from the relay UE, ACK information corresponding to the data packets numbered 0, 1, 3, 5, 6, and 8, and negative acknowledgment (negative acknowledgment, NACK) information corresponding to the data packets numbered 2, 4, and 7, where the ACK information indicates that the relay UE successfully receives the data packets numbered 0, 1, 3, 5, 6, and 8, and the NACK information indicates that the relay UE fails to receive the data packets numbered 2, 4, and 7 (a symbol "×" in the figure indicates that the sending/receiving fails). In this case, the relay UE forwards the data packets to the remote UE. It is assumed that only the data packet numbered 0 is successfully sent, and the other data packets (data packets numbered 1, 3, 5, 6, and 8) fail to be sent.

In this case, according to the foregoing data forwarding mechanism, as shown in FIG. 11B, the source base station delivers, to the target base station in the data forwarding manner, only the downlink data packets (for example, the data packets numbered 2, 4, and 7) for which ACK information fails to be received and a new downlink data packet (represented by a dashed-line box). After the remote UE accesses the target base station, the target base station retransmits (retransmission) the data packets numbered 2, 4, and 7 and the new downlink data packet to the remote UE through a target link. However, for the remote UE, either before or after link switching, the data packets numbered 1, 3, 5, 6, and 8 fail to be received, that is, these data packets are lost.

Similarly, a packet loss problem also exists in the inter-base station switching scenario in the case (c) shown in FIGS. 6A, 6B, 6C. In this case, when performing S1008, the remote UE accesses, based on the received RRC reconfiguration message, a target relay UE and the target cell managed by the target base station. When performing S1009, the remote UE sends the RRC reconfiguration complete message to the target base station through the target relay UE. Other steps are similar to those shown in FIG. 10, and reference may be made accordingly. Details are not described herein again. Optionally, there may alternatively be a multipath connection on the source base station side. For example, the remote UE communicates with the source base station through a plurality of relay devices, or communicates with the source base station through a direct link and an indirect link. A packet loss problem may exist on the indirect link between the remote UE and the source base station. After the switching, there may be a direct link, an indirect link, or a plurality of paths between the remote UE and the target base station. The plurality of paths may include a direct link and/or an indirect link.

For a packet loss problem that exists when the data forwarding mechanism is implemented in the CP-UP separation architecture shown in FIG. 9 for a CU-CP function and a CU-UP function of the source base station and/or the target base station, embodiments of this application provide some solutions, to reduce packet loss and ensure downlink data transmission performance of the remote UE, for example, downlink lossless transmission.

For ease of understanding, with reference to different method flowcharts, the following describes interaction processes involved when the source base station and/or the target base station use/uses different structures.

FIG. 12 is a schematic flowchart of a data transmission method according to an embodiment of this application. As shown in FIG. 12, using an example in which a CU-CP function and a CU-IP function of a source base station are deployed separately (the CP-UP separation architecture shown in FIG. 9), the data transmission method may include the following steps.

S1210: A first network device determines that a first terminal switches from the first network device to a third network device.

In this example, the first network device may provide a control plane communication service for the first terminal, the first network device may be implemented as a CU-CP of the source base station, a second network device may provide a user plane communication service for the first terminal, the second network device may be implemented as a CU-UP of the source base station, and the third network device may be implemented as a target base station.

During specific implementation of S 1210, the first network device may determine, by directly or indirectly exchanging information with the first terminal, the second network device, or the third network device, that the first terminal switches from the first network device to the third network device.

For example, the first network device may communicate with the first terminal through a source relay device, receive measurement report information from the first terminal, and analyze, based on the measurement report information, whether quality of a communication link between the first terminal and a relay device or quality of a communication link between a relay device and a source DU deteriorates, to determine whether to switch a communication link for the first terminal, for example, hand over the first terminal to the third network device. The first network device may directly determine, based on the measurement report information, whether to switch the communication link for the first terminal, or the first network device may determine, after communicating with the second network device, whether to switch the communication link for the first terminal.

Alternatively, for example, the first network device may send a handover request message to the third network device when the first network device needs to switch the communication link for the first terminal. The third network device may receive the handover request message from the first network device. If the third network device acknowledges the handover, the third network device may send a handover request acknowledgment message to the first network device. The first network device may determine, based on the handover request acknowledgment message, that the first terminal switches from the first network device to the third network device.

In this embodiment of this application, a type of a communication link between the first terminal and the third network device is not limited. In an example, after the switching, the communication link between the first terminal and the third network device may be a direct link. For example, the first terminal directly communicates with the third network device through a Uu interface. In another example, after the switching, the communication link between the first terminal and the third network device may be an indirect link. For example, the first terminal communicates with the third network device through a target relay device. For ease of differentiation, a relay device on a source link before the first terminal performs switching may be referred to as a first relay device or the source relay device, and a relay device on a target link after the first terminal performs switching may be referred to as a second relay device or the target relay device.

S1220: The first network device sends first indication information to the second network device. Correspondingly, the second network device may receive the first indication information from the first network device.

In this embodiment of this application, the first indication information indicates a downlink transmission requirement or a downlink transmission parameter of the first terminal, and the downlink transmission requirement or the downlink transmission parameter of the first terminal indicates the second network device to send first downlink data to the third network device, so that the second network device knows how to forward the downlink data of the first terminal to the third network device, thereby reducing packet loss and ensuring downlink data transmission performance of the first terminal, for example, downlink lossless transmission. Further, the second network device may send the first downlink data of the first terminal to the third network device based on the first indication information. Alternatively, the second network device may send a part or all of the first downlink data of the first terminal to the third network device based on the first indication information.

In this embodiment of this application, the first indication information may indicate the downlink transmission requirement or the downlink transmission parameter of the first terminal in an explicit or implicit manner. In an optional implementation, the first indication information may indicate downlink transmission requirements or downlink transmission parameters of all radio bearers of the first terminal. Correspondingly, the first downlink data may include downlink data of all the radio bearers of the first terminal. In another optional implementation, the first indication information may indicate downlink transmission requirements or downlink transmission parameters of some radio bearers of the first terminal. Correspondingly, the first downlink data may include downlink data of the one or more radio bearers of the first terminal.

For example, the first indication information indicates the downlink transmission requirements or the downlink transmission parameters of all the radio bearers of the first terminal. For example, when the explicit indication manner is used, the first indication information may be enabling information. When receiving the enabling information, the second network device may consider that the first network device indicates the downlink transmission requirements or the downlink transmission parameters of all the radio bearers of the first terminal, so that the second network device ensures a downlink lossless transmission requirement of the first terminal. Alternatively, for example, the first indication information may include information about stopping an operation of discarding a downlink data packet based on receiving a reception success acknowledgment indication from the source relay device, to indicate the downlink transmission requirements or the downlink transmission parameters of all the radio bearers of the first terminal. For example, when the implicit indication manner is used, the first indication information may include a link switching type of the first terminal, for example, an inter-station switching type from an indirect link to a direct link, or an inter-station switching type from an indirect link to an indirect link. After receiving the first indication information, the second network device may consider that the second network device receives the downlink transmission requirement or the downlink transmission parameter of the first terminal, so that the second network device ensures a downlink lossless transmission requirement of the first terminal. Similarly, the first network device may indicate the downlink transmission requirements or the downlink transmission parameters of the some radio bearers of the first terminal by using the first indication information in a similar manner. Optionally, the first indication information may further include an identifier of the one or more radio bearers of the first terminal.

In this embodiment of this application, the first indication information may further indicate to buffer first downlink data of all the radio bearers of the first terminal. The radio bearer of the first terminal may include a data radio bearer and/or a signaling radio bearer of the first terminal. "Buffer" herein may be understood as saving or storage, and is temporary storage. For example, the first downlink data may include downlink data for which a reception success acknowledgment indication is received from the source relay device. In another understanding, "buffer" may be not deleting when an ACK indication is received. For example, the first downlink data may include downlink data for which a reception success acknowledgment indication is received from the source relay device but a discarding operation is not performed. Optionally, the buffered first downlink data may be cleared when a packet discarding condition is met, for example, cleared periodically or cleared when a data amount buffer threshold is exceeded. For details, refer to the following descriptions. Details are not described herein.

Based on the buffered first downlink data, the second network device may send a part or all of the first downlink data to the third network device. For example, if necessary, the second network device may forward, to the third network device, downlink data that is in the buffered first downlink data and for which a reception failure indication (for example, a NACK) is received from the source relay device, and downlink data that is in the buffered first downlink data and for which a reception success acknowledgment indication (for example, an ACK) is received from the source relay device, so that after the first terminal switches to the third network device, the third network device sends a part or all of the downlink data to the first terminal, thereby reducing packet loss and ensuring downlink data transmission performance of the first terminal, for example, downlink lossless transmission.

During specific implementation, the first indication information may be an explicit indication. For example, the first indication information is the enabling information. When receiving the enabling information, the second network device may consider that the first downlink data of all the radio bearers of the first terminal needs to be buffered. Alternatively, for example, the first indication information may include the information about the operation of stopping, based on receiving the reception success acknowledgment indication from the source relay device, discarding the downlink data packet, to indicate to buffer the first downlink data of all the radio bearers of the first terminal.

Alternatively, the first indication information may be an implicit indication. For example, the first indication information may include the link switching type of the first terminal, for example, the inter-station switching type from an indirect link to a direct link, or the inter-station switching type from an indirect link to an indirect link. After receiving the first indication information, the second network device may consider that the first downlink data of all the radio bearers of the first terminal needs to be buffered.

In another example, the first network device may ensure downlink lossless transmission of the first terminal based on a granularity of a radio bearer. For example, the first network device may determine, from all the radio bearers of the first terminal, one or more radio bearers that need to meet a first transmission requirement. The first indication information may indicate a downlink transmission requirement or a downlink transmission parameter of the one or more radio bearers of the first terminal. Optionally, the first indication information may further indicate to buffer first downlink data of the one or more radio bearers of the first terminal. For ease of differentiation, in this embodiment of this application, the one or more radio bearers that meet the first transmission requirement may be referred to as a first radio bearer.

For example, the first transmission requirement may be a downlink lossless transmission requirement agreed on in a protocol, or a downlink lossless transmission requirement determined based on internal implementation of the base station, for example, a transmission mode requirement or a quality of service (quality of service, QoS) requirement. For example, if it is agreed in the protocol or in the internal implementation of the base station that a radio bearer using an acknowledged mode (acknowledged mode, AM) needs to meet the downlink lossless transmission requirement, the first network device may determine that the radio bearer using the AM mode of the first terminal is the radio bearer that needs to meet the first transmission requirement. Alternatively, for example, the QoS parameter may include a packet loss rate, and the first network device may determine a radio bearer whose packet loss rate is greater than or equal to a packet loss rate threshold as the first radio bearer for which the downlink lossless transmission requirement needs to be ensured. If the packet loss rate is less than the packet loss rate threshold, it is considered that a probability that packet loss occurs on the corresponding radio bearer is low, and the downlink lossless transmission requirement may not be considered temporarily. The packet loss rate threshold may be agreed on in a protocol, or may be a configuration determined by the source base station. In another possible implementation, the first network device determines, based on implementation, radio bearers that need to meet the first transmission requirement, and indicates the radio bearers to the second network device. This is not limited herein.

In this example, the first indication information sent by the first network device to the second network device may include identification information of the first radio bearer. For example, a DRB 1 and a DRB 2 are used to represent identifiers of two radio bearers of the first terminal. If the DRB 1 and the DRB 2 use an AM transmission mode, the first indication information may include identification information of the DRB 1 and the DRB 2, to indicate downlink transmission requirements or downlink transmission parameters of the DRB 1 and the DRB 2 of the first terminal. Optionally, the first indication information may further indicate the second network device to buffer downlink data of the DRB 1 and the DRB 2, to ensure downlink lossless transmission on the DRB 1 and the DRB 2.

Alternatively, for example, the first indication information may include first transmission requirement indication information and/or a transmission mode of the radio bearer of the first terminal, for example, an AM mode or an unacknowledged mode (unacknowledged mode, UM). In a possible manner, the second network device may consider that downlink lossless transmission needs to be ensured for a radio bearer using the AM mode, that is, determine the radio bearer using the AM mode as the first radio bearer, and determine a downlink transmission requirement or a downlink transmission parameter of the radio bearer using the AM mode of the first terminal, or buffer downlink data of the radio bearer using the AM mode. Alternatively, the first indication information may indicate only a radio bearer using the AM mode, and the second network device may determine, based on the indicated AM mode, a downlink transmission requirement or a downlink transmission parameter of the radio bearer using the AM mode of the first terminal, or buffer downlink data of the radio bearer using the AM mode. Alternatively, the first transmission requirement indication information indicates to ensure downlink lossless transmission, and the second network device may determine, based on the first transmission requirement indication information, a radio bearer using the AM mode as the first radio bearer.

It may be understood that S1210 and S1220 are merely examples of steps included in the data transmission method in this embodiment of this application, but are not any limitation. During specific implementation, S1210 may be performed before S1220, or S1220 may be performed before S1210, or S1210 and S1220 may be simultaneously performed.

For example, the first network device performs S1220 before S1210. Specifically, the first network device may perform S1220 after establishing an indirect link to the first terminal, to indicate downlink transmission requirements or downlink transmission parameters of all or some radio bearers of the first terminal. Optionally, if the first indication information indicates to buffer first downlink data of one or more radio bearers of the first terminal, the second network device may buffer downlink data of all or some radio bearers of the first terminal based on the first indication information. Subsequently, the first network device may perform S1210 by using a quality detection result of a source link between the first network device and the first terminal, to switch a communication link for the first terminal.

In the method, to prevent the second network device side from buffering a large amount of first downlink data, the buffered first downlink data may be cleared based on a data receiving status of the first terminal. In a possible implementation, the first network device requests the first terminal to report data receiving status information at a specific interval, and the data receiving status information may be, for example, implemented as a PDCP status report. The second network device may receive the data receiving status information from the first terminal, and clear, based on the data receiving status information of the first terminal, the first downlink data that has been successfully received by the first terminal, that is, no longer buffer the first downlink data. In another possible implementation, the first network device may configure the first terminal to periodically report data receiving status information/a data receiving status report (specifically, the first network device may send configuration information to the first terminal, where the configuration information includes a period T, indicating the first terminal to report the data receiving status information at an interval of T), for example, a PDCP status report. The second network device may clear, based on the data receiving status information/the data receiving status report of the first terminal, the first downlink data that has been successfully received by the first terminal, that is, no longer buffer the first downlink data. In another possible manner, each time a buffered data amount reaches a data amount buffer threshold, the second network device may indicate the first terminal device to report data receiving status information, so that the second network device clears the first downlink data, that is, no longer buffers the first downlink data.

Optionally, the first network device may further indicate a data amount buffer threshold to the second network device due to a limitation on a buffer capacity of the second network device, a buffer capacity allocated by the second network device to the first terminal, or a maximum buffered data amount of each radio bearer. For example, the first network device sends fourth indication information to the second network device, where the fourth indication information includes the data amount buffer threshold of the second network device. When a data amount of the first downlink data that needs to be buffered exceeds the data amount buffer threshold, the second network device may discard a data packet in the buffered first downlink data based on the data amount buffer threshold of the second network device, where buffer space after the packet discarding is used to buffer a data packet in newly arriving first downlink data. For ease of differentiation, the newly arriving first downlink data may be further referred to as second downlink data. In a possible implementation, the first network device may further indicate a data amount buffer threshold of a first radio bearer to the second network device, to restrict a maximum buffered data amount of a single radio bearer. In this case, the fourth indication information may include an identifier of a first radio bearer and a data amount buffer threshold of the first radio bearer. Similarly, when a buffered data amount corresponding to the first radio bearer exceeds the data amount buffer threshold corresponding to the radio bearer, the second network device may discard a buffered downlink data packet in the first radio bearer based on the data amount buffer threshold of the second network device, where buffer space after the packet discarding is used to buffer a downlink data packet that newly arrives at the first radio bearer.

Optionally, in this embodiment of this application, several levels of a buffered data amount may be set, for example, a first buffer level, a second buffer level, and a third buffer level. Each buffer level may be associated with one data amount buffer threshold. For example, a buffer threshold corresponding to the first buffer level is less than a buffer threshold corresponding to the second buffer level, and the buffer threshold corresponding to the second buffer level is less than a buffer threshold corresponding to the third buffer level. The first network device may further indirectly indicate a data amount buffer threshold by indicating, to the second network device, a buffer level used by the radio bearer of the first terminal. The second network device may determine the corresponding data amount buffer threshold based on the buffer level indicated by the first network device.

For example, the first network device performs S 1210 before S 1220. Specifically, when determining, based on the measurement report information of the first terminal, to hand over the first terminal to a cell managed by the target base station, the first network device may perform S 1210, that is, determine that the first terminal switches from the first network device to the third network device. To ensure downlink lossless transmission of the radio bearer of the first terminal, the first network device may perform S1220 before sending handover-related configuration information (for example, RRC reconfiguration information) to the first terminal, to indicate the second network device to buffer related downlink data of the first terminal, so that after the switching is completed, the third network device retransmits a part or all of the downlink data to the first terminal, thereby reducing packet loss and ensuring downlink lossless transmission of the first terminal.

In this embodiment of this application, the first network device may further send a first message to the third network device, where the first message may include a downlink transmission requirement or a downlink transmission parameter of the first terminal. Correspondingly, the third network device may receive the first message from the first network device. Based on the downlink transmission requirement or the downlink transmission parameter of the first terminal, the third network device may subsequently implement a data forwarding mechanism in collaboration with the first network device, to retransmit the related downlink data of the first terminal, thereby reducing packet loss and ensuring downlink lossless transmission.

For example, the first message may be implemented as the handover request (HO request) message sent by the first network device to the third network device in FIG. 10, where the first message may be further used to request to hand over the first terminal to the third network device. The first message may include downlink transmission requirements or downlink transmission parameter indications of all radio bearers of the first terminal, and the downlink transmission requirements or the downlink transmission parameter indications indicate the second network device to ensure downlink lossless transmission of all the radio bearers of the first terminal. Alternatively, if the first network device ensures downlink lossless transmission of the first terminal based on a granularity of a radio bearer, the first message may include an identifier of one or more radio bearers of the first terminal, and the one or more radio bearers may be referred to as a first radio bearer. Similar to the foregoing descriptions, the first radio bearer may be determined based on a performance requirement of the radio bearer. For example, a transmission mode of the first radio bearer may be an acknowledged mode, or quality of service of the first radio bearer meets a first transmission requirement. Details are not described herein again.

In another embodiment, the first network device may alternatively implicitly indicate a downlink transmission requirement or a downlink transmission parameter of the first terminal to the third network device.

For example, when the first network device sends a first message to the third network device, the first message may carry handover configuration information of the first network device, where the handover configuration information may include a link switching type of the first terminal, for example, an inter-station switching type from an indirect link to the third network device. The third network device may determine the downlink transmission requirement or the downlink transmission parameter of the first terminal based on a protocol agreement, for example, determine that downlink lossless transmission of the first terminal needs to be ensured when the link switching type is used.

Alternatively, for example, when the first network device sends a first message to the third network device, the first message may carry handover configuration information of the first network device, where the handover configuration information may include transmission mode information of the radio bearer of the first terminal, for example, an AM mode or a UM mode. The third network device may use a downlink transmission requirement or a downlink transmission parameter of a radio bearer using the AM mode by default. For example, downlink lossless transmission of the radio bearer using the AM mode needs to be ensured by default.

Optionally, before the switching, the first network device may indicate the first terminal to report data receiving status information, for example, a PDCP status report. After receiving the data receiving status information of the first terminal, the first network device may send the first message to the third network device, and indicate a downlink transmission requirement or a downlink transmission parameter of the first terminal to the third network device by adding a receiving status of downlink data of the one or more radio bearers of the first terminal to the first message, or indicate a downlink transmission requirement or a downlink transmission parameter of the one or more radio bearers of the first terminal to the third network device.

Optionally, the third network device may support a function of providing downlink lossless transmission for the first terminal, or may not support a function of providing downlink lossless transmission for the first terminal. The third network device may perform an indication in a handover request acknowledgment message fed back to the first network device. If the third device does not support the function of providing downlink lossless transmission for the first terminal, the first network device side may stop buffering first downlink data of the first terminal.

Optionally, after determining to provide the function of ensuring downlink lossless transmission for the first terminal, the third network device may further configure data recovery indication information for the first terminal, for example, PDCP data recovery indication information. The data recovery indication information may be carried in the handover request acknowledgment message sent by the third network device to the first network device, that is, carried in a configuration of the third network device for the first terminal, so that the first terminal can report the data receiving status information to the third network device after accessing the third network device. Optionally, the third network device may configure, based on a granularity of a radio bearer, the data recovery indication information for one or more radio bearers that are of the first terminal and for which downlink lossless transmission needs to be ensured, for example, configure the data recovery indication information for the first radio bearer. This is not limited in this embodiment of this application.

Optionally, the first network device may further determine a receiving status of downlink data of the one or more radio bearers of the first terminal by interacting with the third network device, and indicate, based on the receiving status, the second network device to send a part or all of buffered first downlink data to the third network device.

For example, after switching to the third network device, the first terminal may send data receiving status information to the third network device, where the data receiving status information may be, for example, a PDCP status report. For example, the data receiving status information may be carried in a seventh message from the first terminal. The third network device may send a second message to the first network device based on the data receiving status information from the first terminal, where the second message may include sixth indication information, and the sixth indication information may indicate the receiving status of the downlink data of the one or more radio bearers of the first terminal. For example, the receiving status includes at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

The first network device may send second indication information to the second network device based on the received second message, where the second indication information may include the receiving status of the downlink data of the one or more radio bearers of the first terminal. Correspondingly, the second network device may receive the second indication information from the first network device, and send a part or all of the buffered first downlink data to the third network device based on the second indication information. It should be understood that, in this embodiment of this application, the "message" or the "indication information" is merely an example of an information carrier, but is not any limitation. During specific implementation, content included in the "message" and the "indication information" may be the same or different, and formats of the "message" and the "indication information" may be the same or different. This is not limited in this embodiment of this application.

In another possible implementation, the second network device may determine a receiving status of downlink data of the one or more radio bearers of the first terminal by interacting with the third network device, and send a part or all of buffered first downlink data to the third network device based on the receiving status. For example, the second network device may receive a sixth message from the third network device, where the sixth message may include ninth indication information, and the ninth indication information may indicate the receiving status of the downlink data of the one or more radio bearers of the first terminal. For example, the receiving status includes at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

Correspondingly, the second network device may send a part or all of the buffered first downlink data to the third network device based on the ninth indication information in the received sixth message. Similarly, in this embodiment of this application, the "message" or the "indication information" is merely an example of an information carrier, but is not any limitation. During specific implementation, content included in the "message" and the "indication information" may be the same or different, and formats of the "message" and the "indication information" may be the same or different. This is not limited in this embodiment of this application.

In this embodiment of this application, to avoid a problem that excessive buffered downlink data imposes an excessively high requirement on a buffer capability of the source base station, in some implementations, the second network device side further needs to stop buffering the first downlink data of the first terminal. A trigger occasion for stopping buffering the first downlink data may be flexibly set, and an example is as follows:

For example, the second network device may stop buffering the first downlink data after determining the receiving status of the downlink data of the one or more radio bearers of the first terminal. When receiving the second indication information from the first network device, the second network device may determine the receiving status of the downlink data of the one or more radio bearers of the first terminal, and stop buffering the first downlink data corresponding to the indicated one or more radio bearers. Alternatively, for example, when receiving the sixth message from the third network device, the second network device may determine the receiving status of the downlink data of the one or more radio bearers of the first terminal, and stop buffering the first downlink data corresponding to the indicated one or more radio bearers.

Alternatively, for example, the second network device may receive third indication information from the first network device, where the third indication information may indicate the second network device to stop buffering the first downlink data. The first network device may send the third indication information to the second network device after receiving a third message, where the third message may indicate to release a terminal context, or the third message indicates to release a connection between the first network device and a core network device. Alternatively, the first network device may send the third indication information to the second network device after sending a fourth message to the first terminal, where the fourth message indicates the first terminal to switch from the first network device and the second network device to the third network device. Alternatively, the first network device may send the third indication information to the second network device after receiving a fifth message from the first terminal, where the fifth message is used to acknowledge that the first terminal switches from the first network device and the second network device to the third network device.

Alternatively, for example, before sending an RRC reconfiguration message to the first terminal, the first network device may indicate the first terminal to report data receiving status information, where the data receiving status information may be, for example, a PDCP status report. Further, the first network device may indicate, based on the data receiving status information reported by the first terminal, the second network device to discard downlink data that has been successfully received by the first terminal and that is buffered on the second network device side. Alternatively, before sending an RRC reconfiguration message to the first terminal, the first network device may indicate the source relay device to report a downlink data forwarding status, that is, downlink data packets that have been successfully forwarded by the source relay device to the first terminal. The first network device may indicate, based on the downlink data forwarding status, the second network device to discard downlink data that has been successfully received by the first terminal and that is buffered on the second network device side.

Therefore, in the foregoing solution, when the CU-CP function and the CU-UP function of the source base station are deployed separately, the first network device interacts with the first terminal, the second network device, or the third network device, so that the source base station and the target base station can implement the data forwarding mechanism based on the downlink lossless transmission requirement of the first terminal and the receiving status of the downlink data of the one or more radio bearers of the first terminal, thereby reducing packet loss and ensuring downlink lossless transmission of the first terminal as much as possible.

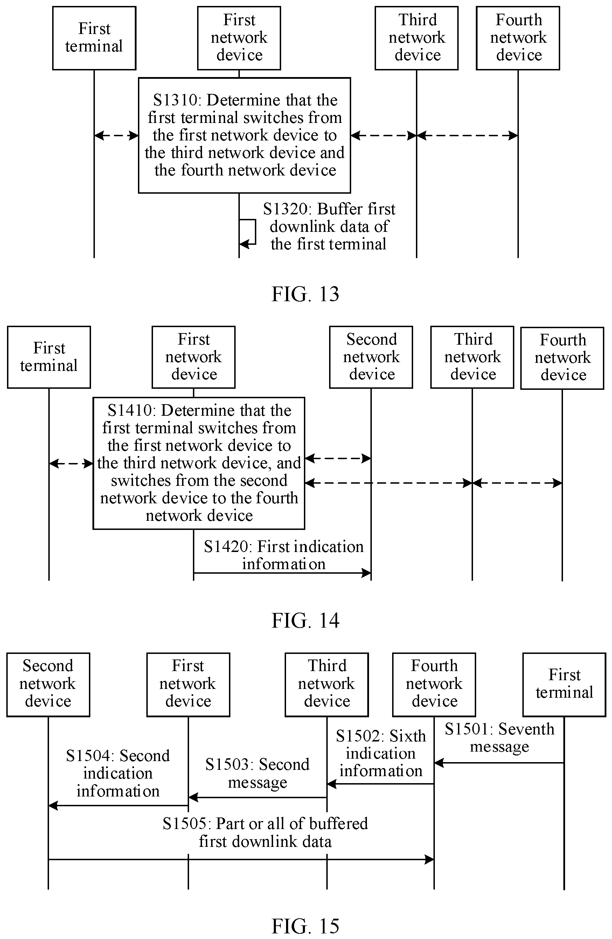

FIG. 13 is a schematic flowchart of a data transmission method according to an embodiment of this application. If functions of the first network device and the second network device shown in FIG. 12 are deployed on a same source base station (for example, represented as a first network device), and a CU-CP function and a CU-UP function of a third network device are deployed separately, for example, represented as the third network device and a fourth network device, the third network device may be configured to implement a CU-CP function of a target base station, and the fourth network device may be configured to implement a CU-UP function of the target base station. As shown in FIG. 13, the data transmission method may include the following steps.

S1310: The first network device determines that a first terminal switches from the first network device to the third network device and the fourth network device.

In this example, the first network device may provide control plane and user plane communication services for the first terminal, the first network device may be implemented as the source base station, the third network device may provide a control plane communication service for the first terminal, for example, may be implemented as a CU-CP of the target base station, and the fourth network device may provide a user plane communication service for the first terminal, for example, may be implemented as a CU-UP of the target base station.

During specific implementation of S 1310, the first network device may determine, by directly or indirectly exchanging information with the first terminal, the third network device, or the fourth network device, that the first terminal switches from the first network device to the third network device and the fourth network device.

For example, the first network device may communicate with the first terminal through a source relay device, receive measurement report information from the first terminal, and analyze, based on the measurement report information, whether quality of a communication link between the first terminal and the source relay device or quality of a communication link between the source relay device and the first network device deteriorates, to determine whether to switch a communication link for the first terminal, for example, hand over the first terminal to the third network device and the fourth network device.

Alternatively, for example, the first network device may send a handover request message to the third network device when the first network device needs to switch the communication link for the first terminal. The third network device may receive the handover request message from the first network device. If the third network device acknowledges the handover, the third network device may send a handover request acknowledgment message to the first network device. The first network device may determine, based on the handover request acknowledgment message, that the first terminal switches from the first network device to the third network device and the fourth network device. The third network device may directly send the handover request acknowledgment message to the first network device, or may send the handover request acknowledgment message to the first network device after communicating with the fourth network device. This is not limited in this embodiment of this application.

In this embodiment of this application, a type of a communication link between the first terminal and the third network device/the fourth network device is not limited. In an example, after the switching, the communication link between the first terminal and the third network device/the fourth network device may be a direct link. For example, the first terminal directly communicates with a target DU through a Uu interface, the target DU is connected to the third network device/the fourth network device, and the first terminal communicates with the third network device/the fourth network device through the target DU. In another example, after the switching, the communication link between the first terminal and the third network device/the fourth network device may be an indirect link. For example, the first terminal communicates with a target relay device through a PC5 interface, the target relay device is connected to a target DU through a Uu interface, and the target DU is connected to the third network device/the fourth network device. In other words, the first terminal communicates with the third network device/the fourth network device through the target relay device and the target DU. In another example, the communication link between the first terminal and the third network device/the fourth network device may be multipath communication, and the multipath may include the direct link and/or the indirect link described above. This is not limited in this embodiment of this application. For ease of differentiation, a relay device on a source link before the first terminal performs switching may be referred to as a first relay device or the source relay device, and a relay device on a target link after the first terminal performs switching may be referred to as a second relay device or the target relay device.

S1320: The first network device buffers first downlink data of the first terminal.

In this embodiment of this application, the first network device may buffer the first downlink data of the first terminal based on a downlink transmission requirement or a downlink transmission parameter of the first terminal.

A meaning of "buffer" herein is the same as that described in FIG. 12. For details, refer to the related descriptions with reference to FIG. 12. Details are not described herein again.

Based on the buffered first downlink data, the first network device may send a part or all of the first downlink data to the fourth network device. For example, if necessary, the first network device may forward, to the fourth network device, downlink data that is in the buffered first downlink data and for which a reception failure indication (for example, a NACK) is received from the source relay device, and downlink data that is in the buffered first downlink data and for which a reception success acknowledgment indication (for example, an ACK) is received from the source relay device, so that after the first terminal switches to the third network device and the fourth network device, the fourth network device sends a part or all of the downlink data to the first terminal, thereby reducing packet loss and ensuring downlink lossless transmission of the first terminal.

In an example, the first network device may buffer first downlink data of all radio bearers of the first terminal. The radio bearer of the first terminal may include a data radio bearer and/or a signaling radio bearer of the first terminal.

In another example, the first network device may ensure downlink lossless transmission of the first terminal based on a granularity of a radio bearer. For example, the first network device may determine, from all the radio bearers of the first terminal, one or more radio bearers that need to meet a first transmission requirement, and buffer first downlink data of the one or more radio bearers of the first terminal. For ease of differentiation, in this embodiment of this application, the one or more radio bearers that meet the first transmission requirement may be referred to as a first radio bearer. A meaning of the "first transmission requirement" herein is the same as that described in FIG. 12. For details, refer to the related descriptions with reference to FIG. 12. Details are not described herein again.

It may be understood that S1310 and S1320 are merely examples of steps included in the data transmission method in this embodiment of this application, but are not any limitation. During specific implementation, S1310 may be performed before S1320, or S1320 may be performed before S1310, or S1310 and S1320 may be simultaneously performed.

For example, the first network device performs S1320 before S1310. Specifically, the first network device may perform S1320 after establishing an indirect link between the first network device and the first terminal, to buffer downlink data of all or some radio bearers of the first terminal. Subsequently, the first network device may perform S1310 by using a quality detection result of a source link between the first network device and the first terminal, to switch a communication link for the first terminal, for example, hand over the first terminal from the first network device to the third network device and the fourth network device. In the method, to prevent the first network device side from buffering a large amount of first downlink data, the buffered first downlink data may be cleared based on a data receiving status of the first terminal, a buffer level, or a data amount buffer threshold. Related implementation details are the same as those described in FIG. 12. For details, refer to the related descriptions with reference to FIG. 12. Details are not described herein again.

For example, the first network device performs S1310 before S1320. Specifically, when determining, based on the measurement report information of the first terminal, to hand over the first terminal to a cell managed by the target base station, the first network device may perform S1310, that is, determine that the first terminal switches from the first network device to the third network device and the fourth network device. To ensure downlink lossless transmission of the radio bearer of the first terminal, the first network device may perform S1320 before sending handover-related configuration information (for example, the RRC reconfiguration message in FIG. 10) to the first terminal, to buffer related downlink data of the first terminal, so that after the switching is completed, the fourth network device retransmits a part or all of the downlink data to the first terminal, thereby reducing packet loss and ensuring downlink lossless transmission of the first terminal.

In this embodiment of this application, the first network device may further send a first message to the third network device, where the first message may include a downlink transmission requirement or a downlink transmission parameter of the first terminal. Correspondingly, the third network device may receive the first message from the first network device. Based on the downlink transmission requirement or the downlink transmission parameter of the first terminal, the third network device may subsequently implement a data forwarding mechanism in collaboration with the first network device, to retransmit the related downlink data of the first terminal, thereby reducing packet loss and ensuring downlink lossless transmission.

For example, the first message may be implemented as the handover request message sent by the first network device to the third network device in FIG. 10, where the first message may be further used to request to hand over the first terminal to the third network device and the fourth network device. The first message may include downlink transmission requirements or downlink transmission parameter indications of all radio bearers of the first terminal, and the downlink transmission requirements or the downlink transmission parameters indicate the third network device to ensure downlink lossless transmission of all the radio bearers of the first terminal. Alternatively, if the first network device ensures downlink lossless transmission of the first terminal based on a granularity of a radio bearer, the first message may include an identifier of one or more radio bearers of the first terminal, and the one or more radio bearers may be referred to as a first radio bearer. Similar to the foregoing descriptions with reference to FIG. 12, the first radio bearer may be determined based on a performance requirement of the radio bearer. For example, a transmission mode of the first radio bearer may be an acknowledged mode, or quality of service of the first radio bearer meets a first transmission requirement. Details are not described herein again.

In another embodiment, the first network device may alternatively implicitly indicate a downlink transmission requirement or a downlink transmission parameter of the first terminal to the third network device. Related implementation details are the same as those described in FIG. 12. For details, refer to the related descriptions with reference to FIG. 12. Details are not described herein again.

Optionally, the third network device may support a function of providing downlink lossless transmission for the first terminal, or may not support a function of providing downlink lossless transmission for the first terminal. The third network device may perform an indication in a handover request acknowledgment message fed back to the first network device. If the third device does not support the function of providing downlink lossless transmission for the first terminal, the first network device side may stop buffering first downlink data of the first terminal.

Optionally, after determining to provide the function of ensuring downlink lossless transmission for the first terminal, the third network device may further configure data recovery indication information for the first terminal, for example, PDCP data recovery indication information. The data recovery indication information may be carried in the handover request acknowledgment message sent by the third network device to the first network device, that is, carried in a configuration of the third network device for the first terminal, so that the first terminal reports the data receiving status information to the fourth network device after accessing the third network device and the fourth network device. Optionally, the third network device may configure, based on a granularity of a radio bearer, the data recovery indication information for one or more radio bearers that are of the first terminal and for which downlink lossless transmission needs to be ensured, for example, configure the data recovery indication information for the first radio bearer. This is not limited in this embodiment of this application.

Optionally, the first network device may further determine a receiving status of downlink data of the one or more radio bearers of the first terminal by interacting with the third network device and/or the fourth network device, and send a part or all of buffered first downlink data to the fourth network device based on the receiving status.

For example, after switching to the third network device and the fourth network device, the first terminal may send a seventh message to the fourth network device, where the seventh message may include data receiving status information, for example, a PDCP status report. The fourth network device may determine the receiving status of the downlink data of the one or more radio bearers of the first terminal based on the data status receiving information from the first terminal. For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In a possible implementation, the fourth network device may send sixth indication information to the third network device based on the receiving status, where the sixth indication information may indicate the receiving status of the downlink data of the one or more radio bearers of the first terminal. Correspondingly, the third network device may receive the sixth indication information from the fourth network device. The third network device may determine the receiving status of the downlink data of the one or more radio bearers of the first terminal based on the sixth indication information. Further, the third network device may send a second message to the first network device based on the receiving status, where the second message may include the receiving status of the downlink data of the one or more radio bearers of the first terminal. Correspondingly, the first network device receives the second message from the third network device, where the second message may include the sixth indication information, and the sixth indication information may indicate the receiving status of the downlink data of the one or more radio bearers of the first terminal. For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1. During specific implementation, the second message may be an XnAP message, and includes content of a PDCP status report of one or more radio bearers, for example, an identifier of the radio bearer, a first packet loss FMC corresponding to the radio bearer, and a bitmap. Optionally, content of the PDCP status report is included in the XnAP message in a form of a container (container).

The first network device may send a part or all of the buffered first downlink data to the fourth network device based on the receiving status of the downlink data of the one or more radio bearers of the first terminal, for example, may include downlink data for which a reception success acknowledgment indication is received from the source relay device. Correspondingly, the fourth network device may receive the downlink data from the first network device, and send a part or all of the downlink data from the first network device to the first terminal, to reduce packet loss, and ensure downlink data transmission performance of the first terminal as much as possible.

In another possible implementation, the fourth network device may send a sixth message to the first network device, where the sixth message may include ninth indication information, and the ninth indication information may indicate the receiving status of the downlink data of the one or more radio bearers of the first terminal. For example, the receiving status includes at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1. Correspondingly, the first network device may send a part or all of the buffered first downlink data to the fourth network device based on the ninth indication information in the received sixth message. Similarly, in this embodiment of this application, the "message" or the "indication information" is merely an example of an information carrier, but is not any limitation. During specific implementation, content included in the "message" and the "indication information" may be the same or different, and formats of the "message" and the "indication information" may be the same or different. This is not limited in this embodiment of this application.

Optionally, the third network device may send fifth indication information to the fourth network device, where the fifth indication information may indicate a downlink transmission requirement or a downlink transmission parameter of the first terminal, or may indicate a downlink transmission requirement or a downlink transmission parameter of the one or more radio bearers of the first terminal. Correspondingly, the fourth network device may receive the fifth indication information from the third network device. Further, the fourth network device may send the sixth message to the first network device based on the fifth indication information.

During specific implementation, the fourth network device may pre-establish a user plane tunnel (for example, a GTP-U tunnel) from the fourth network device to the first network device, and send the sixth message to the first network device by using the user plane tunnel, where the sixth message may be, for example, user plane control information on an Xn interface. In a possible implementation, the first network device may indicate the third network device and the fourth network device to establish the user plane tunnel. For example, the first message sent by the first network device to the third network device may further include a target address of the user plane tunnel. After receiving the first message, the third network device may send eighth indication information to the fourth network device based on the target address of the user plane tunnel, where the eighth indication information may indicate the fourth network device to establish the user plane tunnel from the fourth network device to the first network device. Correspondingly, the fourth network device may receive the eighth indication information from the third network device, and establish the user plane tunnel from the fourth network device to the first network device based on the eighth indication information. Further, the fourth network device may send a sixth message to the first network device by using the user plane tunnel, where the sixth message may include the receiving status of the downlink data of the one or more radio bearers of the first terminal.

Optionally, the user plane tunnel is in one-to-one correspondence with a first radio bearer of the first terminal, and the first radio bearer is a radio bearer that needs to meet a first transmission requirement.

Optionally, when the user plane tunnel is in one-to-one correspondence with a first radio bearer, the sixth message does not include identification information of the radio bearer. After receiving the sixth message from the user plane tunnel, the second network device may learn, based on the correspondence between the user plane tunnel and the first radio bearer, that the sixth message includes a receiving status of downlink data corresponding to the first radio bearer.

In this embodiment of this application, to avoid a problem that excessive buffered downlink data imposes an excessively high requirement on a buffer capability of the source base station, in some implementations, the first network device side further needs to stop buffering the first downlink data of the first terminal. A trigger occasion for stopping buffering the first downlink data may be flexibly set, and an example is as follows:

For example, the first network device may stop buffering the first downlink data after determining the receiving status of the downlink data of the one or more radio bearers of the first terminal. When receiving the second message from the third network device, the first network device may determine the receiving status of the downlink data of the one or more radio bearers of the first terminal, and stop buffering the first downlink data corresponding to the indicated one or more radio bearers.

Alternatively, for example, the first network device may stop buffering the first downlink data after receiving a third message. The third message may indicate to release a terminal context, or the third message indicates to release a connection between the first network device and a core network device.

Alternatively, for example, the first network device may stop buffering the first downlink data after sending a fourth message to the first terminal. The fourth message may indicate the first terminal to switch to the third network device, and/or the fourth message may indicate the first terminal to switch to the fourth network device. Alternatively, the first network device may stop buffering the first downlink data after receiving a fifth message from the first terminal. The fifth message is used to acknowledge that the first terminal switches to the third network device, and/or the fifth message is used to acknowledge that the first terminal switches to the fourth network device.

Alternatively, for example, before sending an RRC reconfiguration message to the first terminal, the first network device may indicate the first terminal to report data receiving status information, for example, a PDCP status report. Further, the first network device may discard, based on content of the data receiving status information reported by the first terminal, downlink data that has been successfully received by the first terminal and that is buffered on the first network device side. Alternatively, before sending an RRC reconfiguration message to the first terminal, the first network device may indicate the source relay device to report a downlink data forwarding status, that is, downlink data packets that have been successfully forwarded by the source relay device to the first terminal. The first network device may discard, based on the downlink data forwarding status, downlink data that has been successfully received by the first terminal and that is buffered on the first network device side.

Therefore, in the foregoing solution, when the CU-CP function and the CU-UP function of the target base station are deployed separately, the first network device interacts with the first terminal, the third network device, or the fourth network device, so that the source base station and the target base station can implement the data forwarding mechanism based on the downlink lossless transmission requirement of the first terminal and the receiving status of the downlink data of the one or more radio bearers of the first terminal, thereby reducing packet loss and ensuring downlink lossless transmission of the first terminal as much as possible.

FIG. 14 is a schematic flowchart of a data transmission method according to an embodiment of this application. When a CU-CP function and a CU-UP function of a third network device shown in FIG. 12 are deployed separately, for example, represented as the third network device and a fourth network device, the third network device may be configured to implement a CU-CP function of a target base station, and the fourth network device may be configured to implement a CU-UP function of the target base station. As shown in FIG. 14, the data transmission method may include the following steps.

S1410: A first network device determines that a first terminal switches from the first network device to the third network device, and switches from a second network device to the fourth network device.

In this example, the first network device may provide a control plane communication service for the first terminal, the first network device may be implemented as a CU-CP of a source base station, the second network device may provide a user plane communication service for the first terminal, and the second network device may be implemented as a CU-UP of the source base station. The third network device may provide a control plane communication service for the first terminal, for example, may be implemented as a CU-CP of the target base station, and the fourth network device may provide a user plane communication service for the first terminal, for example, may be implemented as a CU-UP of the target base station.

During specific implementation of S 1410, the first network device may determine, by directly or indirectly exchanging information with the first terminal, the second network device, the third network device, or the fourth network device, that the first terminal switches from the first network device to the third network device, and switches from the second network device to the fourth network device.

For example, the first network device may communicate with the first terminal through a source relay device, receive measurement report information from the first terminal, and analyze, based on the measurement report information, whether quality of a communication link between the first terminal and the source relay device or quality of a communication link between the source relay device and a source DU deteriorates, to determine whether to switch a communication link for the first terminal, for example, hand over the first terminal from the first network device to the third network device, and hand over the first terminal from the second network device to the fourth network device. The first network device may directly determine, based on the measurement report information, whether to switch the communication link for the first terminal, or the first network device may determine, after communicating with the second network device, whether to switch the communication link for the first terminal.

Alternatively, for example, the first network device may send a handover request message to the third network device when the first network device needs to switch the communication link for the first terminal. The third network device may receive the handover request message from the first network device, and if the third network device acknowledges the handover, the third network device may send a handover request acknowledgment message to the first network device. The first network device may receive the handover request acknowledgment message from the third network device, and determine, based on the handover request acknowledgment message, that the first terminal switches from the first network device to the third network device, and switches from the second network device to the fourth network device. The third network device may directly send the handover request acknowledgment message to the first network device, or may send the handover request acknowledgment message to the first network device after communicating with the fourth network device.

After the switching, a link type supported between the first terminal and the third network device/the fourth network device is similar to the link type described in FIG. 13. For detailed implementation details, refer to the foregoing related descriptions with reference to FIG. 13. Details are not described herein again.

S1420: The first network device sends first indication information to the second network device. Correspondingly, the second network device may receive the first indication information from the first network device.

In this embodiment of this application, the first indication information indicates a downlink transmission requirement or a downlink transmission parameter of the first terminal, and the downlink transmission requirement or the downlink transmission parameter of the first terminal indicates the second network device to send first downlink data to the fourth network device, so that the second network device knows how to forward the downlink data of the first terminal to the fourth network device, thereby reducing packet loss and ensuring downlink data transmission performance of the first terminal, for example, downlink lossless transmission. Optionally, the first downlink data may include downlink data of one or more radio bearers of the first terminal. Further, the second network device may send the first downlink data of the first terminal to the fourth network device based on the first indication information, or the second network device may send a part or all of the first downlink data of the first terminal to the fourth network device based on the first indication information. A meaning of the "first indication information" herein is the same as that described in FIG. 12. For details, refer to the related descriptions with reference to FIG. 12. Details are not described herein again.

Same as the manner described with reference to FIG. 12, in an optional implementation, the first indication information may further indicate to buffer first downlink data of all radio bearers of the first terminal. The radio bearer of the first terminal may include a data radio bearer and/or a signaling radio bearer of the first terminal. A meaning of "buffer" herein is the same as that described in FIG. 12. For details, refer to the related descriptions with reference to FIG. 12. Details are not described herein again.

Based on the buffered first downlink data, the second network device may send a part or all of the buffered first downlink data to the fourth network device. For example, if necessary, the second network device may forward, to the fourth network device, downlink data that is in the buffered first downlink data and for which a reception failure indication (for example, a NACK) is received from the source relay device, and downlink data that is in the buffered first downlink data and for which a reception success acknowledgment indication (for example, an ACK) is received from the source relay device, so that after the first terminal switches from the second network device to the fourth network device, the fourth network device sends a part or all of the downlink data to the first terminal, thereby reducing packet loss and ensuring downlink data transmission performance of the first terminal.

In another example, the first network device may ensure downlink lossless transmission of the first terminal based on a granularity of a radio bearer. For example, the first network device may determine, from all the radio bearers of the first terminal, one or more radio bearers that need to meet a first transmission requirement. The first indication information may indicate a downlink transmission requirement or a downlink transmission parameter of the one or more radio bearers of the first terminal. Optionally, the first indication information may further indicate to buffer first downlink data of the one or more radio bearers of the first terminal. For similar descriptions, refer to the foregoing related descriptions with reference to FIG. 12. Details are not described herein again. For ease of differentiation, in this embodiment of this application, the one or more radio bearers that meet the first transmission requirement may be referred to as a first radio bearer.

It may be understood that S 1410 and S 1420 are merely examples of steps included in the data transmission method in this embodiment of this application, but are not any limitation. During specific implementation, S1410 may be performed before S1420, or S1420 may be performed before S 1410, or S 1410 and S 1420 may be simultaneously performed.

For example, the first network device performs S 1420 before S1410. Specifically, the first network device may perform S1420 after establishing an indirect link between the first network device, the second network device, and the first terminal, to indicate downlink transmission requirements or downlink transmission parameters of all or some radio bearers of the first terminal. Optionally, if the first indication information indicates to buffer first downlink data of one or more radio bearers of the first terminal, the second network device may buffer downlink data of all or some radio bearers of the first terminal based on the first indication information. Subsequently, the first network device may perform S1410 by using a quality detection result of a source link between the first network device and the first terminal, to switch a communication link for the first terminal, for example, hand over the first terminal from the first network device to the third network device, and hand over the first terminal from the second network device to the fourth network device. Similarly, to prevent the second network device side from buffering a large amount of first downlink data, the buffered first downlink data may be cleared based on a data receiving status of the first terminal, a buffer level, or a data amount buffer threshold. Related implementation details are the same as those described in FIG. 12. For details, refer to the related descriptions with reference to FIG. 12 or FIG. 13. Details are not described herein again.

For example, the first network device performs S1410 before S1420. Specifically, when determining, based on the measurement report information of the first terminal, to hand over the first terminal to a cell managed by the target base station, the first network device may perform S1410, that is, determine that the first terminal switches from the first network device to the third network device, and switches from the second network device to the fourth network device. To ensure downlink lossless transmission of the radio bearer of the first terminal, the first network device may perform S1420 before sending handover-related configuration information (for example, the RRC reconfiguration message shown in FIG. 10) to the first terminal, to indicate the second network device to buffer related downlink data of the first terminal, so that after the switching is completed, the fourth network device retransmits a part or all of the downlink data to the first terminal, thereby reducing packet loss and ensuring downlink lossless transmission of the first terminal.

In this embodiment of this application, the first network device may further send a first message to the third network device, where the first message may include a downlink transmission requirement or a downlink transmission parameter indication of the first terminal. The downlink transmission requirement or the downlink transmission parameter indicates the second network device to ensure lossless downlink transmission of all the radio bearers of the first terminal. Correspondingly, the third network device may receive the first message from the first network device, and determine the downlink transmission requirement or the downlink transmission parameter of the first terminal based on the first message. Based on the downlink transmission requirement or the downlink transmission parameter of the first terminal, the third network device and the fourth network device may subsequently implement a data forwarding mechanism in collaboration with the first network device, to retransmit the related downlink data of the first terminal, thereby reducing packet loss and ensuring downlink lossless transmission.

For example, the first message may be implemented as the handover request (HO request) message sent by the first network device to the third network device in FIG. 10, where the first message may be further used to request to hand over the first terminal to the third network device and the fourth network device. The first message may include downlink transmission requirements or downlink transmission parameter indications of all radio bearers of the first terminal, and the downlink transmission requirements or the downlink transmission parameters indicate the second network device to ensure downlink lossless transmission of all the radio bearers of the first terminal. Alternatively, if the first network device ensures downlink lossless transmission of the first terminal based on a granularity of a radio bearer, the first message may include an identifier of one or more radio bearers of the first terminal, and the one or more radio bearers may be referred to as a first radio bearer. Similar to the foregoing descriptions with reference to FIG. 12, the first radio bearer may be determined based on a performance requirement of the radio bearer. For example, a transmission mode of the first radio bearer may be an acknowledged mode, or quality of service of the first radio bearer meets a first transmission requirement. Details are not described herein again.

In another embodiment, the first network device may alternatively implicitly indicate a downlink transmission requirement or a downlink transmission parameter of the first terminal to the third network device. Related implementation details are the same as those described in FIG. 12. For details, refer to the related descriptions with reference to FIG. 12. Details are not described herein again.

Optionally, the third network device may support a function of providing downlink lossless transmission for the first terminal, or may not support a function of providing downlink lossless transmission for the first terminal. The third network device may perform an indication in a handover request acknowledgment message fed back to the first network device. If the third device does not support the function of providing downlink lossless transmission for the first terminal, the first network device side may stop buffering first downlink data of the first terminal.

Optionally, after determining to provide the function of ensuring downlink lossless transmission for the first terminal, the third network device may further configure data recovery indication information for the first terminal, for example, PDCP data recovery indication information. The data recovery indication information may be carried in the handover request acknowledgment message sent by the third network device to the first network device, that is, carried in a configuration of the third network device for the first terminal, so that the first terminal can report the data receiving status information to the third network device after accessing the third network device. Optionally, the third network device may configure, based on a granularity of a radio bearer, the data recovery indication information for one or more radio bearers that are of the first terminal and for which downlink lossless transmission needs to be ensured, for example, configure the data recovery indication information for the first radio bearer. This is not limited in this embodiment of this application.

Optionally, the third network device may further send fifth indication information/seventh indication information to the fourth network device, where the fifth indication information/the seventh indication information indicates the downlink transmission requirement or the downlink transmission parameter of the first terminal. Correspondingly, the fourth network device may receive the fifth indication information/the seventh indication information from the third network device. Therefore, the fourth network device may learn that downlink lossless transmission needs to be ensured for the radio bearer of the first terminal. The fifth indication information/the seventh indication information may be carried in an E1 message (for example, an E1AP message or E1 interface control signaling). Optionally, based on a granularity of a radio bearer, the fifth indication information/the seventh indication information may include an identifier of one or more radio bearers of the first terminal. Therefore, according to the foregoing method, the first network device, the second network device, the third network device, and the fourth network device may learn of a radio bearer that is of the first terminal and for which downlink lossless transmission needs to be ensured.

Further, the first network device and the second network device send, to the fourth network device, downlink data involved in implementing data forwarding, for example, a part or all of the first downlink data, which may include receiving downlink data for which a reception success acknowledgment indication is received from the source relay device. Alternatively, the second network device may send, to the fourth network device based on an indication from the first network device or the fourth network device, downlink data involved in implementing data forwarding, for example, a part or all of the first downlink data, which may include receiving downlink data for which a reception success acknowledgment indication is received from the source relay device.

For example, when the first network device and the second network device send, to the fourth network device based on an implementation, the downlink data involved in implementing data forwarding, the first network device may indicate the second network device to start a data forwarding procedure, and the second network device may send the buffered first downlink data to the fourth network device. After the first terminal switches from the second network device to the fourth network device, the fourth network device may retransmit the downlink data based on a PDCP status report reported by the first terminal.

Alternatively, the fourth network device may send, to the first terminal, all the downlink data received from the second network device, and the first terminal discards a repeatedly received downlink data packet based on a PDCP sequence number.

When the second network device sends, to the fourth network device based on the indication from the first network device or the fourth network device, the downlink data involved in implementing data forwarding, the following two manners may be included:

Manner 1: The first network device determines a receiving status of the downlink data of the one or more radio bearers of the first terminal, and sends second indication information to the second network device based on the receiving status, where the second indication information includes the receiving status of the downlink data of the one or more radio bearers of the first terminal. Based on the receiving status, the second network device may send some or all data packets of the buffered first downlink data to the fourth network device.

As shown in FIG. 15, the manner 1 may include the following steps.

S1501: The first terminal sends a seventh message to the fourth network device. Correspondingly, the fourth network device receives the seventh message from the first terminal. The seventh message includes the receiving status of the downlink data of the one or more radio bearers of the first terminal. For example, the seventh message may include data receiving status information, for example, a PDCP status report.

S1502: The fourth network device determines the receiving status of the downlink data of the one or more radio bearers of the first terminal based on the seventh message, and sends sixth indication information to the third network device. Correspondingly, the third network device receives the sixth indication information.

The sixth indication information indicates the receiving status of the downlink data of the one or more radio bearers of the first terminal. For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

For example, the sixth indication information may be carried in an E1 message (for example, an E1AP message or E1 interface control signaling), and the sixth indication information may include a PDCP status report of the one or more radio bearers. Alternatively, content of a PDCP status report of the one or more radio bearers may be included in an E1 message in a form of a container (container), and an identifier of a corresponding radio bearer is indicated.

Optionally, the fourth network device may indicate, to the third network device, only content of a first PDCP status report of each radio bearer received from the first terminal, where the radio bearer is a radio bearer that has a lossless transmission requirement.

S1503: The third network device determines the receiving status of the downlink data of the one or more radio bearers of the first terminal based on the sixth indication information, and sends a second message to the first network device based on the receiving status. Correspondingly, the first network device receives the second message from the third network device.

The second message includes the receiving status of the downlink data of the one or more radio bearers of the first terminal. For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

For example, the second message may be an XnAP message, and includes content of a PDCP status report of one or more radio bearers, for example, an identifier of the radio bearer, a first packet loss FMC corresponding to the radio bearer, and a bitmap. Optionally, content of the PDCP status report is included in the XnAP message in a form of a container (container).

Optionally, the third network device may indicate, to the first network device, only content of a first PDCP status report of each radio bearer received from the first terminal, where the radio bearer is a radio bearer that has a lossless transmission requirement.

S1504: The first network device sends second indication information to the second network device based on the receiving state included in the second message. Correspondingly, the second network device receives the second indication information from the first network device.

The second indication information includes the receiving status of the downlink data of the one or more radio bearers of the first terminal. The second indication information may be carried in an E1 message (for example, an E1AP message or E1 interface control signaling). For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

S1505: The second network device sends a part or all of the buffered first downlink data to the fourth network device based on the receiving status included in the second indication information. Correspondingly, the fourth network device receives the part or all of the first downlink data from the second network device.

Further, the fourth network device may send, to the first terminal, the part or all of the first downlink data received from the second network device. For example, the fourth network device may send the downlink data based on the PDCP status report reported by the first terminal and the downlink transmission requirement or the downlink transmission parameter of the first terminal. Alternatively, the fourth network device may send, to the first terminal, all the downlink data received from the second network device, and the first terminal discards a repeatedly received downlink data packet based on a PDCP sequence number.

Manner 2: The second network device receives a sixth message from the fourth network device, where the sixth message includes the receiving status of the downlink data of the one or more radio bearers of the first terminal. Based on the receiving status, the second network device may selectively send some or all data packets of the buffered first downlink data to the fourth network device.

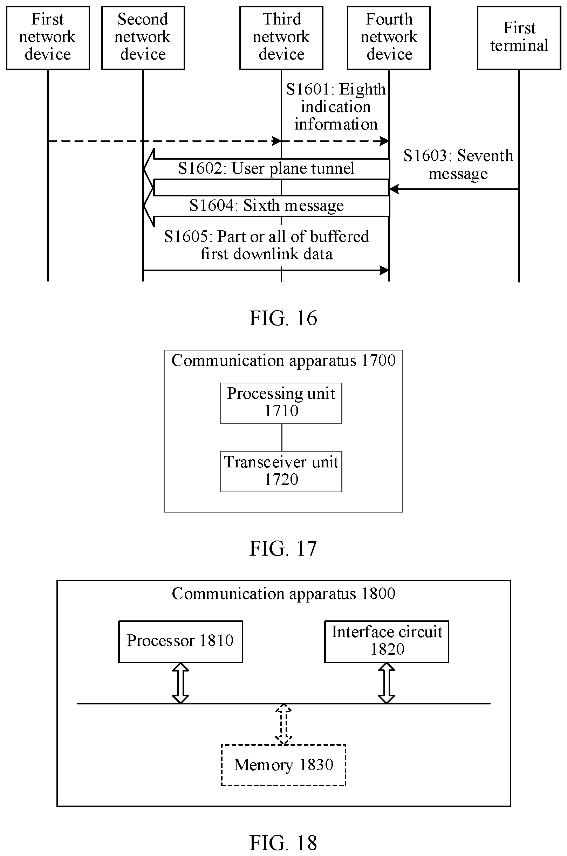

As shown in FIG. 16, the manner 2 may include the following steps.

S1601 (optional step): The third network device sends eighth indication information to the fourth network device. Correspondingly, the fourth network device may receive the eighth indication information from the third network device. The eighth indication information indicates the fourth network device to establish a user plane tunnel from the fourth network device to the second network device.

In a possible implementation, the first network device may add a target address of the user plane tunnel to a first message sent to the third network device. During implementation of S1601, the third network device may send, after receiving the first message, the eighth indication information to the fourth network device based on the target address of the user plane tunnel. In another possible implementation, the third network device may determine, based on the downlink transmission requirement or the downlink transmission parameter of the first terminal, that the user plane tunnel needs to be established, and send the eighth indication information to the fourth network device. A trigger manner and a trigger occasion of the eighth indication information is not limited in this embodiment of this application.

S1602 (optional step): The fourth network device establishes the user plane tunnel from the fourth network device to the second network device. The user plane tunnel is used to send a sixth message from the fourth network device to the second network device, and the sixth message includes the receiving status of the downlink data of the one or more radio bearers of the first terminal.

S1603: The first terminal sends a seventh message to the fourth network device. Correspondingly, the fourth network device receives the seventh message from the first terminal. The seventh message includes the receiving status of the downlink data of the one or more radio bearers of the first terminal. For example, the seventh message may include data receiving status information, for example, a PDCP status report.

S1604: The fourth network device determines the receiving status of the downlink data of the one or more radio bearers of the first terminal based on the seventh message, and sends the sixth message to the second network device. Correspondingly, the second network device receives the seventh message from the fourth network device. For example, the sixth message may be, for example, user plane control information on an Xn interface.

The sixth message includes the receiving status of the downlink data of the one or more radio bearers of the first terminal. The sixth message may be carried on the user plane tunnel from the fourth network device to the second network device. The receiving status includes at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

Optionally, the fourth network device may indicate, to the second network device, only content of a first PDCP status report of each radio bearer received from the first terminal, where the radio bearer is a radio bearer that has a lossless transmission requirement.

S1605: The second network device sends a part or all of the buffered first downlink data to the fourth network device based on the receiving status. Correspondingly, the fourth network device receives the part or all of the first downlink data from the second network device.

Further, the fourth network device may send, to the first terminal, the part or all of the first downlink data received from the second network device. For example, the fourth network device may send the downlink data based on the PDCP status report reported by the first terminal. Alternatively, the fourth network device may send, to the first terminal, all the downlink data received from the second network device, and the first terminal discards a repeatedly received downlink data packet based on a PDCP sequence number.

In this embodiment of this application, to avoid a problem that excessive buffered downlink data imposes an excessively high requirement on a buffer capability of the source base station, in some implementations, the second network device may further stop buffering the first downlink data. A trigger occasion for stopping buffering the first downlink data by the second network device may be flexibly set, and an example is as follows:
(1) The second network device stops buffering the first downlink data after determining the receiving status of the downlink data of the one or more radio bearers of the first terminal.
   When receiving the second indication information from the first network device, the second network device may determine the receiving status of the downlink data of the one or more radio bearers of the first terminal, and stop buffering the first downlink data corresponding to the indicated one or more radio bearers. The second indication information may include the receiving status of the downlink data of the one or more radio bearers of the first terminal. Alternatively, for example, when receiving the sixth message from the fourth network device, the second network device may determine the receiving status of the downlink data of the one or more radio bearers of the first terminal, and stop buffering the first downlink data corresponding to the indicated one or more radio bearers. The sixth message includes the receiving status of the downlink data of the one or more radio bearers of the first terminal.
(2) The second network device stops buffering the first downlink data after receiving third indication information from the first network device.

The third indication information may be generated in the following manner: The first network device sends the third indication information to the second network device after receiving a third message, where the third message indicates to release a terminal context, or the third message indicates to release a connection between the first network device and a core network device.

Alternatively, the third indication information may be generated in the following manner: The first network device sends the third indication information to the second network device after sending a fourth message to the first terminal, where the fourth message indicates the first terminal to switch from the first network device to the third network device, and/or indicate the first terminal to switch from the second network device to the fourth network device.

Alternatively, the third indication information may be generated in the following manner: The first network device sends the third indication information to the second network device after receiving a fifth message from the first terminal, where the fifth message is used to acknowledge that the first terminal switches from the first network device to the third network device, and/or acknowledge that the first terminal switches from the second network device to the fourth network device.

Alternatively, the third indication information may be generated in the following manner: The first network device sends the third indication information to the second network device after determining that the handover of the first terminal fails or the handover of the first terminal is aborted. That the handover fails or the handover is aborted may be, for example, that the first network device receives handover failure indication information or handover abort indication information from the third network device.

Alternatively, before sending the RRC reconfiguration message shown in FIG. 10 to the first terminal, the first network device may indicate the first terminal to report data receiving status information, for example, a PDCP status report. Further, the second network device may discard, based on content of the data receiving status information of the first terminal, downlink data that has been successfully received by the first terminal and that is buffered on the second network device side. Alternatively, before sending an RRC reconfiguration message shown in FIG. 10 to the first terminal, the first network device may indicate the source relay device to report a downlink data forwarding status, that is, downlink data packets that have been successfully forwarded by the source relay device to the first terminal. The second network device may discard, based on the downlink data forwarding status, downlink data that has been successfully received by the first terminal and that is buffered on the second network device side.

In this way, according to the foregoing method, when both the source base station and the target base station implement the data forwarding mechanism in the CP-UP separation architecture shown in FIG. 9, the first network device may indicate, by using the first indication information, the second network device to send the first downlink data to the fourth network device, and further the second network device buffers the first downlink data of the first terminal, so that the first downlink data of the first terminal is forwarded to the first terminal as comprehensively as possible during handover, thereby reducing packet loss and ensuring downlink lossless transmission of the first terminal.

The following describes, with reference to the accompanying drawings, communication apparatuses for implementing the foregoing methods in embodiments of this application. Therefore, all the foregoing content may be used in the following embodiments. Repeated content is not described again.

FIG. 17 is a block diagram of a communication apparatus 1700 according to an embodiment of this application. The communication apparatus 1700 may correspondingly implement functions or steps implemented by the first network device, the second network device, the third network device, or the fourth network device in the foregoing method embodiments. The communication apparatus may include a processing unit 1710 and a transceiver unit 1720. Optionally, the communication apparatus may further include a storage unit. The storage unit may be configured to store instructions (code or a program) and/or data. The processing unit 1710 and the transceiver unit 1720 may be coupled to the storage unit. For example, the processing unit 1710 may read the instructions (the code or the program) and/or the data in the storage unit, to implement a corresponding method. The foregoing units may be independently disposed, or may be partially or completely integrated.

In some possible implementations, the communication apparatus 1700 can correspondingly implement a behavior and a function of the first network device in the foregoing method embodiments. For example, the communication apparatus 1700 may be the first network device, or may be a component (for example, a chip or a circuit) used in the first network device. The transceiver unit 1720 may be configured to perform all receiving or sending operations performed by the first network device in the embodiments shown in FIG. 12 to FIG. 16, for example, S1220 in the embodiment shown in FIG. 12, and/or another process configured to support the technology described in this specification. The processing unit 1710 is configured to perform all operations other than the receiving or sending operations performed by the first network device in the embodiments shown in FIG. 12 to FIG. 16, for example, S1210 in the embodiment shown in FIG. 12, and/or another process configured to support the technology described in this specification.

For example, if a first terminal communicates with the first network device through a relay device, the first network device may be a control plane of a central unit of a source base station. The processing unit 1710 may determine that the first terminal switches from the first network device to a third network device; and the transceiver unit 1720 may send first indication information to a second network device, where the first terminal communicates with the second network device through the relay device, the first indication information indicates a downlink transmission requirement or a downlink transmission parameter of the first terminal, the downlink transmission requirement or the downlink transmission parameter of the first terminal indicates the second network device to send first downlink data to the third network device, and the first downlink data includes downlink data for which a reception success acknowledgment indication is received from the relay device. Optionally, the first downlink data includes downlink data of one or more radio bearers of the first terminal.

In an example, the first indication information may further indicate to buffer first downlink data of the one or more radio bearers of the first terminal. For example, the first indication information may include an identifier of a first radio bearer.

In a possible case, the transceiver unit 1720 is configured to send a first message to the third network device, where the first message includes the downlink transmission requirement or the downlink transmission parameter of the first terminal.

In an example, the first message may include the identifier of the one or more radio bearers of the first terminal. For example, a transmission mode of the first radio bearer is an acknowledged mode, or quality of service of the first radio bearer meets a first transmission requirement.

In a possible case, the first message is further used to request to hand over the first terminal to the third network device. That is, the first message may be a handover request message from the first network device. It should be understood that this is merely an example for describing an implementation of the first message, but is not any limitation. During specific implementation, the first message may also be, for example, an E1 message that is newly added between the first network device and the third network device and that indicates a downlink lossless transmission requirement or a downlink lossless transmission parameter of the first terminal.

In a possible case, the transceiver unit 1720 is further configured to send second indication information to the second network device, where the second indication information includes a receiving status of the downlink data of the one or more radio bearers of the first terminal.

In a possible case, the processing unit 1710 is further configured to determine a receiving status of the downlink data of the one or more radio bearers of the first terminal; and that the transceiver unit sends the second indication information to the second network device includes: sending the second indication information to the second network device based on the receiving status.

In an example, the transceiver unit 1720 is further configured to receive a second message from the third network device, where the second message includes a receiving status of the downlink data of the one or more radio bearers of the first terminal. For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In an example, the receiving status of the downlink data of the one or more radio bearers of the first terminal may be from the first terminal.

In a possible case, the transceiver unit is further configured to send third indication information to the second network device, where the third indication information indicates the second network device to stop buffering the first downlink data.

In an example, that the transceiver unit 1720 sends the third indication information to the second network device may include: receiving a third message, where the third message indicates to release a terminal context; or the third message indicates to release a connection between the first network device and a core network device; and sending the third indication information to the second network device.

In an example, that the transceiver unit 1720 sends the third indication information to the second network device may include: sending a fourth message to the first terminal, where the fourth message indicates the first terminal to switch from the first network device to the third network device, and/or indicates the first terminal to switch from the second network device to the fourth network device; and sending the third indication information to the second network device.

In an example, that the transceiver unit 1720 sends the third indication information to the second network device may include: receiving a fifth message from the first terminal, where the fifth message is used to acknowledge that the first terminal switches from the first network device to the third network device, and/or acknowledge that the first terminal switches from the second network device to the fourth network device; and sending the third indication information to the second network device.

In a possible case, the transceiver unit 1720 is further configured to send fourth indication information to the second network device, where the fourth indication information includes a data amount buffer threshold of the second network device.

In some possible implementations, the communication apparatus 1700 can correspondingly implement a behavior and a function of the second network device in the foregoing method embodiments. For example, the communication apparatus 1700 may be the second network device, or may be a component (for example, a chip or a circuit) used in the second network device. The transceiver unit 1720 may be configured to perform all receiving or sending operations performed by the second network device in the embodiments shown in FIG. 12 to FIG. 16, for example, S1220 in the embodiment shown in FIG. 12, and/or another process configured to support the technology described in this specification. The processing unit 1710 is configured to perform all operations other than the receiving or sending operations performed by the second network device in the embodiments shown in FIG. 12 to FIG. 16, for example, S1210 in the embodiment shown in FIG. 12, and/or another process configured to support the technology described in this specification.

For example, if a first terminal communicates with the second network device through a relay device, the transceiver unit 1720 is configured to receive first indication information from a first network device, where the first terminal communicates with the first network device through the relay device, the first indication information indicates a downlink transmission requirement or a downlink transmission parameter of the first terminal, the downlink transmission requirement or the downlink transmission parameter of the first terminal indicates the second network device to send first downlink data to a fourth network device, and the first downlink data includes downlink data for which a reception success acknowledgment indication is received from the relay device; and the processing unit 1710 is configured to buffer the first downlink data of the first terminal. Optionally, the first downlink data includes downlink data of one or more radio bearers of the first terminal.

In an example, the first indication information may further indicate to buffer first downlink data of the one or more radio bearers of the first terminal.

In an example, a transmission mode of a first radio bearer may be an acknowledged mode, or quality of service of a first radio bearer may meet a first transmission requirement. The first transmission requirement may be specifically a downlink lossless transmission requirement.

In an example, the first indication information may further include an identifier of the first radio bearer. In another embodiment, the first indication information may indicate the first radio bearer in another manner. This is not limited in this embodiment of this application.

In a possible case, the processing unit 1710 is configured to determine a receiving status of the downlink data of the one or more radio bearers of the first terminal; and the transceiver unit is configured to send a part or all of the first downlink data to the fourth network device based on the receiving status, where the fourth network device is a target network device to which the first terminal switches from the second network device.

In a possible case, the transceiver unit 1720 is further configured to receive second indication information from the first network device, where the second indication information includes the receiving status of the downlink data of the one or more radio bearers of the first terminal.

In a possible case, the transceiver unit 1720 is further configured to receive a sixth message from the fourth network device, where the sixth message includes the receiving status of the downlink data of the one or more radio bearers of the first terminal.

For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet.

In an example, the receiving status of the downlink data of the one or more radio bearers of the first terminal may be from the first terminal.

In a possible case, the transceiver unit 1720 is further configured to receive third indication information from the first network device, where the third indication information indicates the second network device to stop buffering the first downlink data; and stop buffering the first downlink data.

In a possible case, the transceiver unit 1720 is further configured to discard a data packet in the buffered first downlink data based on a data amount buffer threshold of the second network device, where buffer space after the packet discarding is used to buffer a data packet in newly arriving first downlink data.

In a possible case, the transceiver unit 1720 is further configured to receive fourth indication information from the first network device, where the fourth indication information includes the data amount buffer threshold of the second network device.

In some possible implementations, the communication apparatus 1700 can correspondingly implement a behavior and a function of the third network device in the foregoing method embodiments. For example, the communication apparatus 1700 may be the third network device, or may be a component (for example, a chip or a circuit) used in the third network device. The transceiver unit 1720 may be configured to perform all receiving or sending operations performed by the third network device in the embodiments shown in FIG. 12 to FIG. 16, for example, S1502 and S1503 in the embodiment shown in FIG. 15, and/or another process configured to support the technology described in this specification. The processing unit 1710 is configured to perform all operations other than the receiving or sending operations performed by the third network device in the embodiments shown in FIG. 12 to FIG. 16.

For example, if a first terminal switches from a first network device to the third network device, the first terminal communicates with the first network device through a relay device. The processing unit 1710 is configured to determine a receiving status of downlink data of the first terminal; and the transceiver unit 1720 is configured to send a second message to the first network device based on the receiving status, where the second message includes the receiving status of the downlink data of the one or more radio bearers of the first terminal.

For example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In a possible case, the transceiver unit 1720 is further configured to send fifth indication information to a fourth network device, where the fourth network device is a target network device to which the first terminal switches, and the fifth indication information indicates a downlink transmission requirement or a downlink transmission parameter of the first terminal.

In an example, the fifth indication information may include the identifier of the one or more radio bearers of the first terminal.

In an example, the transceiver unit 1720 is further configured to receive sixth indication information from the fourth network device, where the sixth indication information indicates the receiving status of the downlink data of the one or more radio bearers of the first terminal; and the processing unit is further configured to determine the receiving status of the downlink data of the one or more radio bearers of the first terminal based on the sixth indication information.

In a possible case, the transceiver unit is further configured to receive a first message from the first network device, where the first message indicates the downlink transmission requirement or the downlink transmission parameter of the first terminal.

In an example, the first message may include the identifier of the one or more radio bearers of the first terminal.

In an example, a transmission mode of a first radio bearer may be an acknowledged mode, or quality of service of a first radio bearer may meet a first transmission requirement.

In an example, the first message may be further used to request to hand over the first terminal to the third network device.

In some possible implementations, the communication apparatus 1700 can correspondingly implement a behavior and a function of the third network device in the foregoing method embodiments. For example, the communication apparatus 1700 may be the third network device, or may be a component (for example, a chip or a circuit) used in the third network device. The transceiver unit 1720 may be configured to perform all receiving or sending operations performed by the third network device in the embodiments shown in FIG. 12 to FIG. 16, for example, S1502 and S1503 in the embodiment shown in FIG. 15, and/or another process configured to support the technology described in this specification. The processing unit 1710 is configured to perform all operations other than the receiving or sending operations performed by the third network device in the embodiments shown in FIG. 12 to FIG. 16.

For example, if a first terminal switches from a first network device to the third network device, the first terminal communicates with the first network device through a relay device. The transceiver unit 1720 is configured to receive a first message from the first network device, where the first message includes a downlink transmission requirement or a downlink transmission parameter of the first terminal; and send seventh indication information to a fourth network device, where the fourth network device is a target network device to which the first terminal switches, and the seventh indication information indicates the downlink transmission requirement or the downlink transmission parameter of the first terminal.

In an example, the seventh indication information may include an identifier of one or more radio bearers of the first terminal.

In a possible case, when a CU-CP function and a CU-UP function of a source network device are deployed separately, the source network device is represented as the first network device and a second network device. The transceiver unit 1720 is further configured to send eighth indication information to the fourth network device, where the eighth indication information indicates the fourth network device to establish a user plane tunnel from the fourth network device to the second network device, the user plane tunnel is used to send a sixth message from the fourth network device to the second network device, and the sixth message includes a receiving status of one or more radio bearers of downlink data of the first terminal. In another possible case, when a CU-CP function and a CU-UP function of a source network device are not deployed separately, the eighth indication information may specifically indicate the fourth network device to establish a user plane tunnel from the fourth network device to the first network device, the user plane tunnel is used to send a sixth message from the fourth network device to the first network device, and the sixth message includes a receiving status of one or more radio bearers of downlink data of the first terminal.

In an example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In some possible implementations, the communication apparatus 1700 can correspondingly implement a behavior and a function of the fourth network device in the foregoing method embodiments. For example, the communication apparatus 1700 may be the third network device, or may be a component (for example, a chip or a circuit) used in the fourth network device. The transceiver unit 1720 may be configured to perform all receiving or sending operations performed by the fourth network device in the embodiments shown in FIG. 12 to FIG. 16, for example, S1602 and S1603 in the embodiment shown in FIG. 16, and/or another process configured to support the technology described in this specification. The processing unit 1710 is configured to perform all operations other than the receiving or sending operations performed by the fourth network device in the embodiments shown in FIG. 12 to FIG. 16.

For example, if a first terminal switches to the fourth network device, the first terminal communicates with a first network device through a relay device. The processing unit 1710 is configured to determine a receiving status of downlink data of one or more radio bearers of the first terminal; and the transceiver unit 1720 is configured to send sixth indication information to a third network device based on the receiving status, where the third network device is a target network device to which the first terminal switches, and the sixth indication information indicates the receiving status of the downlink data of the one or more radio bearers of the first terminal.

In a possible case, the transceiver unit 1720 is further configured to receive a seventh message from the first terminal, where the seventh message includes the receiving status of the downlink data of the one or more radio bearers of the first terminal.

In an example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In a possible case, the transceiver unit 1720 is further configured to receive fifth indication information from the third network device, where the fifth indication information indicates a downlink transmission requirement or a downlink transmission parameter of the first terminal.

In an example, the fifth indication information may include the identifier of the one or more radio bearers of the first terminal.

In some possible implementations, the communication apparatus 1700 can correspondingly implement a behavior and a function of the fourth network device in the foregoing method embodiments. For example, the communication apparatus 1700 may be the third network device, or may be a component (for example, a chip or a circuit) used in the fourth network device. The transceiver unit 1720 may be configured to perform all receiving or sending operations performed by the fourth network device in the embodiments shown in FIG. 12 to FIG. 16, for example, S1602 and S1603 in the embodiment shown in FIG. 16, and/or another process configured to support the technology described in this specification. The processing unit 1710 is configured to perform all operations other than the receiving or sending operations performed by the fourth network device in the embodiments shown in FIG. 12 to FIG. 16.

For example, if a first terminal switches to the fourth network device, the first terminal communicates with a second network device through a relay device. The processing unit 1710 is configured to determine a receiving status of downlink data of one or more radio bearers of the first terminal; and the transceiver unit 1720 is configured to send a sixth message to the second network device, where the sixth message includes the receiving status of the downlink data of the one or more radio bearers of the first terminal.

In a possible case, the transceiver unit 1720 is further configured to receive a seventh message from the first terminal, where the seventh message includes the receiving status of the downlink data of the one or more radio bearers of the first terminal.

In an example, the receiving status may include at least one of the following content: an identifier of the one or more radio bearers of the first terminal; a sequence number of a first unsuccessfully received data packet corresponding to the one or more radio bearers; and bitmap information corresponding to the one or more radio bearers, where the bitmap information indicates receiving statuses of N subsequent data packets starting from the first unsuccessfully received data packet, and N is an integer greater than or equal to 1.

In a possible case, the transceiver unit 1720 is further configured to receive seventh indication information from a third network device, where the third network device is a target network device to which the first terminal switches, and the seventh indication information indicates a downlink transmission requirement or a downlink transmission parameter of the radio bearer of the first terminal.

In a possible case, when a CU-CP function and a CU-UP function of a source network device are deployed separately, the source network device is represented as a first network device and the second network device. The processing unit 1710 is further configured to establish a user plane tunnel from the fourth network device to the second network device, where the second network device is a source network device to which the first terminal switches, the user plane tunnel is used to send the sixth message from the fourth network device to the second network device, and the sixth message includes the receiving status of the downlink data of the one or more radio bearers of the first terminal. In another possible case, when a CU-CP function and a CU-UP function of a source network device are not deployed separately, the source network device is represented as a first network device. The processing unit 1710 is further configured to establish a user plane tunnel from the fourth network device to the first network device, where the user plane tunnel is used to send the sixth message from the fourth network device to the first network device, and the sixth message includes the receiving status of the downlink data of the one or more radio bearers of the first terminal. In a possible case, the transceiver unit 1720 is further configured to receive eighth indication information from the third network device, where the third network device is the target network device to which the first terminal switches, and the eighth indication information indicates the fourth network device to establish the user plane tunnel from the fourth network device to the second network device.

FIG. 18 is a diagram of a structure of a communication apparatus. The communication device is applicable to operations performed by the first network device, the second network device, the third network device, or the fourth network device in any one of the foregoing method embodiments. For ease of description, FIG. 18 shows only main components of the communication device.

The apparatus 1800 shown in FIG. 18 includes at least one processor 1810 and an interface circuit 1820. In an optional design, the apparatus 1800 may further include a memory 1830.

A specific connection medium between the processor 1810 and the memory 1830 is not limited in embodiments of this application.

In the apparatus shown in FIG. 18, when communicating with another device, the processor 1810 may perform data transmission through the interface circuit 1820.

When the communication apparatus is in the form shown in FIG. 18, the processor 1810 in FIG. 18 may invoke computer executable instructions stored in the memory 1830, so that the apparatus 1800 can perform any one of the foregoing method embodiments.

An embodiment of this application further relates to a chip system. The chip system includes a processor, configured to invoke a computer program or computer instructions stored in a memory, so that the processor performs the method according to any one of the foregoing embodiments.

In a possible implementation, the processor is coupled to the memory through the interface circuit.

In a possible implementation, the chip system may alternatively directly include a memory. The memory stores a computer program or computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

An embodiment of this application further relates to a processor. The processor is configured to invoke a computer program or computer instructions stored in a memory, so that the processor performs the method according to any one of the foregoing embodiments.

In an example, in embodiments of this application, the processor is an integrated circuit chip, and has a signal processing capability. For example, the processor may be an FPGA, may be a general-purpose processor, a DSP, an ASIC, or another programmable logic device, a discrete gate or transistor logic device, or a discrete hardware component, or may be a system on chip (system on chip, SoC), or may be a CPU, or may be a network processor (network processor, NP), or may be a microcontroller unit (microcontroller unit, MCU), or may be a PLD, or another integrated chip, and may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It should be understood that the embodiments of this application may be provided as a method, a system, or a computer program product.

In a possible implementation, an embodiment of this application provides a computer-readable storage medium. The computer-readable storage medium stores program code. When the program code is run on a computer, the computer is caused to perform the foregoing method embodiments.

In a possible implementation, an embodiment of this application provides a computer program product. When the computer program product is run on a computer, the computer is caused to perform the foregoing method embodiments.

In a possible implementation, an embodiment of this application provides a chip system. The chip system may include at least one processor, and the at least one processor may be configured to implement the foregoing method embodiments. Optionally, the chip system may further include a processor, and the processor may be configured to store a computer program or instructions.

Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of the embodiments of this application provided that they fall within the scope of protection defined by the following claims and their equivalent technologies. In various embodiments of this application, unless otherwise stated or there is a logic conflict, terms and/or descriptions in embodiments are consistent and can be mutually referenced, and technical features in different embodiments can be combined based on an internal logical relationship thereof, to form a new embodiment.

## Claims

1. A data transmission method, applied to a first network device, wherein a first terminal communicates with the first network device through a relay device, and the method comprises:
determining that the first terminal switches from the first network device to a third network device; and
sending first indication information to a second network device, wherein the first terminal communicates with the second network device through the relay device, the first indication information indicates a downlink transmission requirement or a downlink transmission parameter of the first terminal, the downlink transmission requirement or the downlink transmission parameter of the first terminal indicates the second network device to send first downlink data to the third network device, and the first downlink data comprises downlink data for which a reception success acknowledgment indication is received from the relay device.

2. The method according to claim 1, wherein the first downlink data comprises downlink data of one or more radio bearers of the first terminal.

3. The method according to claim 1 or 2, wherein the first indication information further indicates to buffer first downlink data of the one or more radio bearers of the first terminal.

4. The method according to any one of claims 1 to 3, wherein the method further comprises:
sending a first message to the third network device, wherein the first message comprises the downlink transmission requirement or the downlink transmission parameter of the first terminal.

5. The method according to claim 4, wherein the first message comprises an identifier of the one or more radio bearers of the first terminal.

6. The method according to any one of claims 1 to 5, wherein the method further comprises:
sending second indication information to the second network device, wherein the second indication information comprises a receiving status of the downlink data of the one or more radio bearers of the first terminal.

7. The method according to any one of claims 1 to 5, wherein the method further comprises:
receiving a second message from the third network device, wherein the second message comprises a receiving status of the downlink data of the one or more radio bearers of the first terminal.

8. The method according to any one of claims 1 to 7, wherein the method further comprises:
sending third indication information to the second network device, wherein the third indication information indicates the second network device to stop buffering the first downlink data.

9. A data transmission method, applied to a second network device, wherein a first terminal communicates with the second network device through a relay device, and the method comprises:
receiving first indication information from a first network device, wherein the first terminal communicates with the first network device through the relay device, the first indication information indicates a downlink transmission requirement or a downlink transmission parameter of the first terminal, the downlink transmission requirement or the downlink transmission parameter of the first terminal indicates the second network device to send first downlink data to a fourth network device, and the first downlink data comprises downlink data for which a reception success acknowledgment indication is received from the relay device; and
buffering the first downlink data of the first terminal.

10. The method according to claim 9, wherein the first downlink data comprises downlink data of one or more radio bearers of the first terminal.

11. The method according to claim 9 or 10, wherein the first indication information further indicates to buffer first downlink data of the one or more radio bearers of the first terminal.

12. The method according to any one of claims 9 to 11, wherein the method further comprises:
determining a receiving status of the downlink data of the one or more radio bearers of the first terminal; and
sending a part or all of the first downlink data to the fourth network device based on the receiving status, wherein the fourth network device is a target network device to which the first terminal switches from the second network device.

13. The method according to claim 12, wherein the method further comprises:
receiving second indication information from the first network device, wherein the second indication information comprises the receiving status of the downlink data of the one or more radio bearers of the first terminal.

14. The method according to claim 12, wherein the method further comprises:
receiving a sixth message from the fourth network device, wherein the sixth message comprises the receiving status of the downlink data of the one or more radio bearers of the first terminal.

15. The method according to any one of claims 9 to 14, wherein the method further comprises:
receiving third indication information from the first network device, wherein the third indication information indicates the second network device to stop buffering the first downlink data; and
stopping buffering the first downlink data.

16. A data transmission method, applied to a third network device, wherein a first terminal switches from a first network device to the third network device, the first terminal communicates with the first network device through a relay device, and the method comprises:
determining a receiving status of downlink data of one or more radio bearers of the first terminal; and
sending a second message to the first network device based on the receiving status, wherein the second message comprises the receiving status of the downlink data of the one or more radio bearers of the first terminal.

17. The method according to claim 16, wherein the method further comprises:
sending fifth indication information to a fourth network device, wherein the fourth network device is a target network device to which the first terminal switches, and the fifth indication information indicates a downlink transmission requirement or a downlink transmission parameter of the first terminal.

18. The method according to claim 17, wherein the fifth indication information comprises an identifier of the one or more radio bearers of the first terminal.

19. The method according to any one of claims 16 to 18, wherein determining the receiving status of the downlink data of the one or more radio bearers of the first terminal further comprises:
receiving sixth indication information from the fourth network device, wherein the fourth network device is the target network device to which the first terminal switches, and the sixth indication information indicates the receiving status of the downlink data of the one or more radio bearers of the first terminal; and
determining the receiving status of the downlink data of the one or more radio bearers of the first terminal based on the sixth indication information.

20. The method according to any one of claims 16 to 19, wherein the method further comprises:
receiving a first message from the first network device, wherein the first message indicates the downlink transmission requirement or the downlink transmission parameter of the first terminal.

21. The method according to claim 20, wherein the first message comprises the identifier of the one or more radio bearers of the first terminal.

22. A data transmission method, applied to a third network device, wherein a first terminal switches from a first network device to the third network device, the first terminal communicates with the first network device through a relay device, and the method comprises:
receiving a first message from the first network device, wherein the first message comprises a downlink transmission requirement or a downlink transmission parameter of the first terminal; and
sending seventh indication information to a fourth network device, wherein the fourth network device is a target network device to which the first terminal switches, and the seventh indication information indicates the downlink transmission requirement or the downlink transmission parameter of the first terminal.

23. The method according to claim 22, wherein the seventh indication information comprises an identifier of one or more radio bearers of the first terminal.

24. The method according to claim 22 or 23, wherein the method further comprises:
sending eighth indication information to the fourth network device, wherein the eighth indication information indicates the fourth network device to establish a user plane tunnel from the fourth network device to the first network device, the user plane tunnel is used to send a sixth message from the fourth network device to the first network device, and the sixth message comprises a receiving status of one or more radio bearers of downlink data of the first terminal.

25. A data transmission method, applied to a fourth network device, wherein a first terminal switches to the fourth network device, the first terminal communicates with a source network device through a relay device, and the method comprises:
determining a receiving status of downlink data of one or more radio bearers of the first terminal; and
sending sixth indication information to a third network device based on the receiving status, wherein the third network device is a target network device to which the first terminal switches, and the sixth indication information indicates the receiving status of the downlink data of the one or more radio bearers of the first terminal.

26. The method according to claim 25, wherein the method further comprises:
receiving a seventh message from the first terminal, wherein the seventh message comprises the receiving status of the downlink data of the one or more radio bearers of the first terminal.

27. The method according to claim 25 or 26, wherein the method further comprises:
receiving fifth indication information from the third network device, wherein the fifth indication information indicates a downlink transmission requirement or a downlink transmission parameter of the first terminal.

28. The method according to claim 27, wherein the fifth indication information comprises an identifier of the one or more radio bearers of the first terminal.

29. A data transmission method, applied to a fourth network device, wherein a first terminal switches to the fourth network device, the first terminal communicates with a second network device through a relay device, and the method comprises:
determining a receiving status of downlink data of one or more radio bearers of the first terminal; and
sending a sixth message to the second network device, wherein the sixth message comprises the receiving status of the downlink data of the one or more radio bearers of the first terminal.

30. The method according to claim 29, wherein the method further comprises:
receiving a seventh message from the first terminal, wherein the seventh message comprises the receiving status of the downlink data of the one or more radio bearers of the first terminal.

31. The method according to claim 29 or 30, wherein the method further comprises:
receiving seventh indication information from a third network device, wherein the third network device is a target network device to which the first terminal switches, and the seventh indication information indicates a downlink transmission requirement or a downlink transmission parameter of the first terminal.

32. The method according to any one of claims 29 to 31, wherein the method further comprises:
establishing a user plane tunnel from the fourth network device to the second network device, wherein the second network device is a source network device to which the first terminal switches, the user plane tunnel is used to send the sixth message from the fourth network device to the second network device, and the sixth message comprises the receiving status of the downlink data of the one or more radio bearers of the first terminal.

33. The method according to claim 32, wherein the method further comprises:
receiving eighth indication information from the third network device, wherein the third network device is the target network device to which the first terminal switches, and the eighth indication information indicates the fourth network device to establish the user plane tunnel from the fourth network device to the second network device.

34. A communication apparatus, comprising a unit configured to perform the method according to any one of claims 1 to 8, a unit configured to perform the method according to any one of claims 9 to 15, a unit configured to perform the method according to any one of claims 16 to 21, a unit configured to perform the method according to any one of claims 22 to 24, a unit configured to perform the method according to any one of claims 25 to 28, or a unit configured to perform the method according to any one of claims 29 to 33.

35. A communication apparatus, wherein the apparatus comprises at least one processor, and the at least one processor is configured to invoke a computer program or instructions in a memory, to perform the method according to any one of claims 1 to 8, the method according to any one of claims 9 to 15, the method according to any one of claims 16 to 21, the method according to any one of claims 22 to 24, the method according to any one of claims 25 to 28, or the method according to any one of claims 29 to 33.

36. A chip system, wherein the chip system comprises at least one processor, and the at least one processor is configured to invoke one or more computer programs or instructions in a memory, to implement the method according to any one of claims 1 to 8, the method according to any one of claims 9 to 15, the method according to any one of claims 16 to 21, the method according to any one of claims 22 to 24, the method according to any one of claims 25 to 28, or the method according to any one of claims 29 to 33.

37. A communication system, comprising one or more of the following: a network device configured to implement the method according to any one of claims 1 to 8, a network device configured to implement the method according to any one of claims 9 to 15, a network device configured to implement the method according to any one of claims 16 to 21, a network device configured to implement the method according to any one of claims 22 to 24, a network device configured to implement the method according to any one of claims 25 to 28, or a network device configured to implement the method according to any one of claims 29 to 33.

38. A computer-readable storage medium, wherein the computer-readable storage medium stores computer executable instructions, and when the computer executable instructions are invoked by an electronic apparatus, the electronic apparatus is caused to perform the method according to any one of claims 1 to 8, the method according to any one of claims 9 to 15, the method according to any one of claims 16 to 21, the method according to any one of claims 22 to 24, the method according to any one of claims 25 to 28, or the method according to any one of claims 29 to 33.

39. A computer program product, comprising computer executable instructions, wherein when the computer executable instructions are run on a computer, the computer is caused to perform the method according to any one of claims 1 to 8, the method according to any one of claims 9 to 15, the method according to any one of claims 16 to 21, the method according to any one of claims 22 to 24, the method according to any one of claims 25 to 28, or the method according to any one of claims 29 to 33.
